(19) Europäisches Patentamt
European Patent Office
Office européen des brevets

(11) EP 2 926 178 B1

(12) **EUROPEAN PATENT SPECIFICATION**

(45) Date of publication and mention of the grant of the patent:
**28.12.2016 Bulletin 2016/52**

(21) Application number: **13808366.2**

(22) Date of filing: **27.11.2013**

(51) Int Cl.:
***G02B 1/04*** *(2006.01)*

(86) International application number:
**PCT/US2013/072151**

(87) International publication number:
**WO 2014/085531 (05.06.2014 Gazette 2014/23)**

(54) **POLYIMIDE OPTICAL ARTICLES HAVING SELECTIVE TRANSMITTANCE PROPERTIES**

OPTISCHE POLYIMIDARTIKEL MIT SELEKTIVEN DURCHLÄSSIGKEITSEIGENSCHAFTEN

ARTICLES OPTIQUES À BASE DE POLYIMIDE PRÉSENTANT DES PROPRIÉTÉS DE TRANSMISSION SÉLECTIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2012 US 201261732304 P**

(43) Date of publication of application:
**07.10.2015 Bulletin 2015/41**

(73) Proprietor: **SABIC Global Technologies B.V.**
**4612 PX Bergen op Zoom (NL)**

(72) Inventors:
- **CAO, Feng**
**Selkirk, New York 12158 (US)**
- **NARAYANAN, Aditya**
**Santa Clara, CA 95054 (US)**

(74) Representative: **Office Freylinger**
**P.O. Box 48**
**8001 Strassen (LU)**

(56) References cited:
**EP-A1- 2 070 973 US-A1- 2012 127 565**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 926 178 B1

## Description

### BACKGROUND

Optical articles comprising a polyimide are disclosed herein.

Fiber optic technology has been traditionally used for long distance communication but with increases in internet usage for large amounts of data transfer, much of the bandwidth in the existing optical network is used for this data communication and at higher rates. Increasingly fiber optics is being used to connect computer networks to meet the huge demand of data and at higher data transfer speeds, even at shorter distances.

As part of evolving fiber optic technology, there is a need for optical materials and lenses with light transmission in the near IR range (760 nanometers (nm) to 2500 nm) and these materials and lens must also block visible light (380 to 670 or even 700 nm) to reduce and/or eliminate visible light interference. The lenses are required to retain their shape at temperatures in excess of 240°C, since laser transmitter/transceiver modules are exposed to high temperatures during their placement on printed circuit boards by a solder re-flow process or a solder bath, especially lead free solder processes. For this reason, only polymers with high glass transition temperatures can be used. These materials and lenses must be able to retain the optical characteristics and be dimensionally stable after exposure to humidity.

Hence there exists an unmet need for optical materials and articles comprising a polymer with high transmission in the range of 760 nm to 2500 nm and little or no transmission in the range of 380 to 670 or even 700 nm, dimensional stability even after exposure to humidity and capable of withstanding lead free solder processes.

### BRIEF SUMMARY

Disclosed herein is an article comprising a lens having a width of 0.1 millimeters to 100 millimeters, a length of 0.5 millimeters to 500 millimeters, and a thickness of 0.2 millimeters to 5 millimeters; and the lens transmits more than 60% of light having a wavelength of 760 nanometers to 2500 nanometers wherein the lens comprises a polymer and a colorant component. The polymer is a high heat polymer having a glass transition temperature that is more than 180°C and the high heat polymer is selected from the group consisting of polyimides, polyphenylene sulfones, polyethersulfones, polysulfones, and polyetheretherketones, and combinations thereof. In some embodiments the polymer comprises a polyimide comprising structural units derived from

(A) a dianhydride/diamine pair wherein the pair comprises

(i) oxydiphthalic anhydride and diaminodiphenylsulfone, or
(ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para- phenylenediamine, diaminodiphenyl sulfone, oxydianiline, and combinations of the foregoing diamines,

(B) a chloro-substituted phthalic anhydride, a diamine selected from the group of meta-phenylenediamine, para-phenylenediamine, diaminodiphenyl sulfone, oxydianiline and combinations thereof, and a dihydroxy phenol salt; or
(C) a combination of (A) and (B).

The colorant component comprises (a) at least two organic dyes, (b) at least an organic dye and an organic pigment, (c) at least two organic pigments, or (d) combinations thereof. The lens is transparent and dimensionally stable at a wall thickness of 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds. In some embodiments the lens transmits more than 50% of light having a wavelength of 760 nanometers to 2500 nanometers.

### BRIEF DESCRIPTION OF THE FIGURES

Figures 1-4 are graphical representations of data from the Examples.

### DETAILED DESCRIPTION

Our invention is based, in part, on the observation that it is now possible to design a lens that has high temperature resistance and that can selectively transmit light at different regions. By using a specific combination of colorants and polymers, it is now possible to make lenses that are transparent and dimensionally stable at a wall thickness of at least

0.2 millimeters to 5.0 millimeters and remain transparent and dimensionally stable after being (a) exposed to a precondition of 60°C/60% relative humidity for 120 hours and (b) then subjected to a lead free solder test having a peak temperature of 260°C for up to 30 seconds.

Disclosed herein is an article comprising a lens. The lens has a width of 0.1 millimeters to 100 millimeters, a length of 0.5 millimeters to 500 millimeters, and a thickness of 0.2 millimeters to 5 millimeters; and transmits more than 60% of light having a wavelength of 760 nanometers to 2500 nanometers. Within this range the lens can specifically transmit more than 60% of light having a wavelength of 1310 nanometers. Also within this range the lens can specifically transmit more than 60% of light having a wavelength of 1550 nanometers. Also within this range the lens can specifically transmit more than 60% of light having a wavelength of 850 nanometers. The lens can have light transmission less than 15% at a wavelength of 380 to 700 nm. The lens can transmit more than 15% of light having a wavelength of greater than 700 to 760 nm.

In some embodiments the lens has a width of 0.1 millimeters to 100 millimeters, a length of 0.5 millimeters to 500 millimeters, and a thickness of 0.2 millimeters to 5 millimeters; and transmits more than 50% of light having a wavelength of 760 nanometers to 2500 nanometers. Within this range the lens can specifically transmit more than 50% of light having a wavelength of 1310 nanometers. Also within this range the lens can specifically transmit more than 50% of light having a wavelength of 1550 nanometers. Also within this range the lens can specifically transmit more than 50% of light having a wavelength of 850 nanometers. The lens can have light transmission less than 20% at a wavelength of 380 to 700 nm. The lens can transmit more than 0% of light having a wavelength of greater than 670 to 760 nm.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations.

The terms "first," "second," and the like, "primary," "secondary," and the like, as used herein do not denote any order, quantity, or importance, but rather are used to distinguish one element from another. The terms "a" and "an" do not denote a limitation of quantity, but rather denote the presence of at least one of the referenced item. "Optional" or "optionally" means that the subsequently described event or circumstance may or may not occur, and that the description includes instances where the event occurs and instances where it does not. The endpoints of all ranges directed to the same component or property are inclusive of the endpoint and independently combinable. Reference throughout the specification to "one embodiment," "another embodiment," "an embodiment," "some embodiments," and so forth, means that a particular element (e.g., feature, structure, property, and/or characteristic) described in connection with the embodiment is included in at least one embodiment described herein, and may or may not be present in other embodiments. In addition, it is to be understood that the described element(s) may be combined in any suitable manner in the various embodiments.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" is intended to include both $C_{1-30}$ branched and straight-chain, unsaturated aliphatic hydrocarbon groups having the specified number of carbon atoms. Examples of alkyl include, but are not limited to, methyl, ethyl, n-propyl, i-propyl, n-butyl, s-butyl, t-butyl, n-pentyl, s-pentyl, n- and s-hexyl, n-and s-heptyl, and, n- and s-octyl. The term "aryl" is intended to mean an aromatic moiety containing the specified number of carbon atoms, such as, but not limited to phenyl, tropone, indanyl or naphthyl.

The term "transparency" means an article of the invention has a transmission of at least 30% at a thickness ranging from 0.2 to 3.2 mm at a wavelength ranging from 760 to 2500 nm, where "thickness" refers to the thickness of an article such as a lens.

Light transmission, when associated with a specific percentage, can be determined at 2.5 millimeters unless otherwise stated.

The term "dimensionally stable" means that an article of this invention exhibits a surface appearance that does not exhibit any cracks (popcorning effect), as defined by J-STD-020-C (2004).

The lens is transparent and dimensionally stable at a wall thickness of 0.2 millimeters to 5 millimeters and remains transparent and dimensionally stable after being (a) exposed to a precondition of 60°C/60% relative humidity for 120 hours and (b) then subjected to a lead free solder test having a peak temperature of 260°C for up to 30 seconds. The lens comprises a polymer which comprises a polyimide as described below and a colorant component. The lens can consist of a polyimide or combination polyimides as described below.

The lens can be transparent and dimensionally stable at a wall thickness of 0.2 millimeters to 5.0 millimeters after being (a) exposed to a precondition of 85°C/85% relative humidity for 120 hours and (b) subjected to a lead free

solder test for 30 seconds at 260°C.

The lens can have a transparency that is greater than or equal to 40% at a thickness of 2 millimeters.

The lens can have a transparency that is greater than or equal to 50% at a thickness of 2 millimeters.

The lens can have a transparency that is greater than or equal to 60% at a thickness of 2 millimeters.

The lens can transmit light selectively in various wavelength ranges. In one embodiment, the lens transmits less than 20% of light having a wavelength selected from the group consisting of 380 to 670 nm, 380 to 671 nm, 380 to 672 nm, 380 to 673 nm, 380 to 674 nm, 380 to 675 nm, 380 to 676 nm, 380 to 677 nm, 380 to 678 nm, 380 to 679 nm, 380 to 680 nm, 380 to 681 nm, 380 to 682 nm, 380 to 683 nm, 684 nm, 380 to 685 nm, 380 to 686 nm, 380 to 687 nm, 380 to 688 nm, 380 to 689 nm, 380 to 690 nm, 380 to 691 nm, 380 to 692 nm, 380 to 693 nm, 380 to 694 nm, 380 to 695 nm, 380 to 696 nm, 380 to 697 nm, 380 to 698 nm, 380 to 700 nm, and combinations thereof. In another embodiment, the lens transmits more than 5% of light having a wavelength selected from the group consisting of from more than 670 to 760 nm, 671 to 760 nm, 672 to 760 nm, 673 to 760 nm, 673 to 760 nm, 673 to 760 nm, 674 to 760 nm, 675 to 760 nm, 676 to 760 nm, 677 to 760 nm, 678 to 760 nm, 679 to 760 nm, 680 to 760 nm, 681 to 760 nm, 682 to 760 nm, 683 to 760 nm, 684 to 760 nm, 685 to 760 nm, 686 to 760 nm, 687 to 760 nm, 688 to 760 nm, 689 to 760 nm, 690 to 760 nm, 691 to 760 nm, 692 to 760 nm, 693 to 760 nm, 694 to 760 nm, 695 to 760 nm, 696 to 760 nm, 697 to 760 nm, 698 to 760 nm, 699 to 760 nm, 700 to 760 nm, and combinations thereof.

In some embodiments, the lens transmits more than zero percent of light having a wavelength selected from the group consisting of from more than 670 to 760 nm, 671 to 760 nm, 672 to 760 nm, 673 to 760 nm, 673 to 760 nm, 673 to 760 nm, 674 to 760 nm, 675 to 760 nm, 676 to 760 nm, 677 to 760 nm, 678 to 760 nm, 679 to 760 nm, 680 to 760 nm, 681 to 760 nm, 682 to 760 nm, 683 to 760 nm, 684 to 760 nm, 685 to 760 nm, 686 to 760 nm, 687 to 760 nm, 688 to 760 nm, 689 to 760 nm, 690 to 760 nm, 691 to 760 nm, 692 to 760 nm, 693 to 760 nm, 694 to 760 nm, 695 to 760 nm, 696 to 760 nm, 697 to 760 nm, 698 to 760 nm, 699 to 760 nm, 700 to 760 nm, and combinations thereof.

In another embodiment, the lens selectively transmits light from a member selected from the group consisting of: (1) less than 20% of light having a wavelength of 380 to 670 nm and more than 5% of light having a wavelength of from more than 670 to 760 nm, (2) less than 20% of light having a wavelength of 380 to 671 nm, and more than 5% of light having a wavelength of from more than 671 to 760 nm, (3) less than 20% of light having a wavelength of 380 to 672 nm and more than 5% of light having a wavelength of from more than 672 to 760 nm, (4) less than 20% of light having a wavelength of 380 to 673 nm, and more than 5% of light having a wavelength of from more than 673 to 760 nm, (5) less than 20% of light having a wavelength of 380 to 674 nm, and more than 5% of light having a wavelength of from more than 674 to 760 nm (6) less than 20% of light having a wavelength of 380 to 675 nm, and more than 5% of light having a wavelength of from more than 675 to 760 nm, (7) less than 20% of light having a wavelength of 380 to 676 nm, and more than 5% of light having a wavelength of from more than 676 to 760 nm, (8), less than 20% of light having a wavelength of 380 to 677 nm, and more than 5% of light having a wavelength of from more than 677 to 760 nm, (9) less than 20% of light having a wavelength of 380 to 678 nm, and more than 5% of light having a wavelength of from more than 678 to 760 nm, (10) less than 20% of light having a wavelength of 380 to 679 nm, and more than 5% of light having a wavelength of from more than 679 to 760 nm, (11) less than 20% of light having a wavelength of 380 to 680 nm, and more than 5% of light having a wavelength of from more than 680 to 760 nm, (12) less than 20% of light having a wavelength of 380 to 681 nm, and more than 5% of light having a wavelength of from more than 681 to 760 nm, (13) less than 20% of light having a wavelength of 380 to 682 nm, and more than 5% of light having a wavelength of from more than 682 to 760 nm, (14) less than 20% of light having a wavelength of 380 to 683 nm, and more than 5% of light having a wavelength of from more than 683 to 760 nm, (15) less than 20% of light having a wavelength of 684 nm and more than 5% of light having a wavelength of from more than 684 to 760 nm, (16) less than 20% of light having a wavelength of 380 to 685 nm, and more than 5% of light having a wavelength of from more than 685 to 760 nm, (17) less than 20% of light having a wavelength of 380 to 686 nm, and more than 5% of light having a wavelength of from more than 686 to 760 nm, (18) less than 20% of light having a wavelength of 380 to 687 nm, and more than 5% of light having a wavelength of from more than 687 to 760 nm, (19) less than 20% of light having a wavelength of 380 to 688 nm, and more than 5% of light having a wavelength of from more than 688 to 760 nm, (20) less than 20% of light having a wavelength of 380 to 689 nm, and more than 5% of light having a wavelength of from more than 689 to 760 nm, (21) less than 20% of light having a wavelength of 380 to 690 nm, and more than 5% of light having a wavelength of from more than 690 to 760 nm, (22) less than 20% of light having a wavelength of 380 to 691 nm, and more than 5% of light having a wavelength of from more than 691 to 760 nm, (23) less than 20% of light having a wavelength of 380 to 692 nm, and more than 5% of light having a wavelength of from 692 to 760 nm, (24) less than 20% of light having a wavelength of 380 to 693 nm, and more than 5% of light having a wavelength of from 693 to 760 nm, (25) less than 20% of light having a wavelength of 380 to 694 nm, and more than 5% of light having a wavelength of from 694 to 760 nm, (26) less than 20% of light having a wavelength of 380 to 695 nm, and more than 5% of light having a wavelength of from 695 to 760 nm, (27) less than 20% of light having a wavelength of 380 to 696 nm, and more than 5% of light having a wavelength of from 696 to 760 nm, (28) less than 20% of light having a wavelength of 380 to 697 nm, and more than 5% of light having a wavelength of from 697 to 760 nm, (29) less than 20% of light having a wavelength of 380 to 698 nm, and more

than 5% of light having a wavelength of from 698 to 760 nm, (30) less than 20% of light having a wavelength of 380 to 699 nm, and more than 5% of light having a wavelength of from 699 to 760 nm, (31) less than 20% of light having a wavelength of 380 to 700 nm, and more than 5% of light having a wavelength of from 700 to 760 nm, and combinations thereof.

In another embodiment, the lens selectively transmits light from a member selected from the group consisting of: (1) less than 20% of light having a wavelength of 380 to 670 nm and more than zero percent of light having a wavelength of from more than 670 to 760 nm, (2) less than 20% of light having a wavelength of 380 to 671 nm, and more than zero percent of light having a wavelength of from more than 671 to 760 nm, (3) less than 20% of light having a wavelength of 380 to 672 nm and more than zero percent of light having a wavelength of from more than 672 to 760 nm, (4) less than 20% of light having a wavelength of 380 to 673 nm, and more than zero percent of light having a wavelength of from more than 673 to 760 nm, (5) less than 20% of light having a wavelength of 380 to 674 nm, and more than zero percent of light having a wavelength of from more than 674 to 760 nm (6) less than 20% of light having a wavelength of 380 to 675 nm, and more than zero percent of light having a wavelength of from more than 675 to 760 nm, (7) less than 20% of light having a wavelength of 380 to 676 nm, and more than zero percent of light having a wavelength of from more than 676 to 760 nm, (8), less than 20% of light having a wavelength of 380 to 677 nm, and more than zero percent of light having a wavelength of from more than 677 to 760 nm, (9) less than 20% of light having a wavelength of 380 to 678 nm, and more than zero percent of light having a wavelength of from more than 678 to 760 nm, (10) less than 20% of light having a wavelength of 380 to 679 nm, and more than zero percent of light having a wavelength of from more than 679 to 760 nm, (11) less than 20% of light having a wavelength of 380 to 680 nm, and more than zero percent of light having a wavelength of from more than 680 to 760 nm, (12) less than 20% of light having a wavelength of 380 to 681 nm, and more than zero percent of light having a wavelength of from more than 681 to 760 nm, (13) less than 20% of light having a wavelength of 380 to 682 nm, and more than zero percent of light having a wavelength of from more than 682 to 760 nm, (14) less than 20% of light having a wavelength of 380 to 683 nm, and more than zero percent of light having a wavelength of from more than 683 to 760 nm, (15) less than 20% of light having a wavelength of 684 nm and more than zero percent of light having a wavelength of from more than 684 to 760 nm, (16) less than 20% of light having a wavelength of 380 to 685 nm, and more than zero percent of light having a wavelength of from more than 685 to 760 nm, (17) less than 20% of light having a wavelength of 380 to 686 nm, and more than zero percent of light having a wavelength of from more than 686 to 760 nm, (18) less than 20% of light having a wavelength of 380 to 687 nm, and more than zero percent of light having a wavelength of from more than 687 to 760 nm, (19) less than 20% of light having a wavelength of 380 to 688 nm, and more than zero percent of light having a wavelength of from more than 688 to 760 nm, (20) less than 20% of light having a wavelength of 380 to 689 nm, and more than zero percent of light having a wavelength of from more than 689 to 760 nm, (21) less than 20% of light having a wavelength of 380 to 690 nm, and more than zero percent of light having a wavelength of from more than 690 to 760 nm, (22) less than 20% of light having a wavelength of 380 to 691 nm, and more than zero percent of light having a wavelength of from more than 691 to 760 nm, (23) less than 20% of light having a wavelength of 380 to 692 nm, and more than zero percent of light having a wavelength of from 692 to 760 nm, (24) less than 20% of light having a wavelength of 380 to 693 nm, and more than zero percent of light having a wavelength of from 693 to 760 nm, (25) less than 20% of light having a wavelength of 380 to 694 nm, and more than zero percent of light having a wavelength of from 694 to 760 nm, (26) less than 20% of light having a wavelength of 380 to 695 nm, and more than zero percent of light having a wavelength of from 695 to 760 nm, (27) less than 20% of light having a wavelength of 380 to 696 nm, and more than zero percent of light having a wavelength of from 696 to 760 nm, (28) less than 20% of light having a wavelength of 380 to 697 nm, and more than zero percent of light having a wavelength of from 697 to 760 nm, (29) less than 20% of light having a wavelength of 380 to 698 nm, and more than zero percent of light having a wavelength of from 698 to 760 nm, (30) less than 20% of light having a wavelength of 380 to 699 nm, and more than zero percent of light having a wavelength of from 699 to 760 nm, (31) less than 20% of light having a wavelength of 380 to 700 nm, and more than zero percent of light having a wavelength of from 700 to 760 nm, and combinations thereof.

The polyimide can comprise structural units derived from (A) a dianhydride/diamine pair comprising (i) oxydiphthalic anhydride and diaminodiphenylsulfone or (ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para- phenylenediamine, diaminodiphenyl sulfone, oxydianiline, and combinations of the foregoing diamines; (B) a chloro-substituted phthalic anhydride, a diamine selected from the group of meta-phenylenediamine, para- phenylenediamine, diaminodiphenyl sulfone, oxydianiline and combinations thereof, and a dihydroxy phenol salt; or (C) a combination of (A) and (B).

The polyimide can consist of structural units derived from (A) a dianhydride/diamine pair comprising (i) oxydiphthalic anhydride and diaminodiphenylsulfone or (ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para- phenylenediamine, diaminodiphenyl sulfone, oxydianiline, and combinations of the foregoing diamines; (B) a chloro-substituted phthalic anhydride, a diamine

selected from the group of meta-phenylenediamine, para- phenylenediamine, diaminodiphenyl sulfone, oxydianiline and combinations thereof, and a dihydroxy phenol salt; or (C) a combination of (A) and (B).

Structural units derived from oxydiphthalic anhydride and diaminodiphenylsulfone have the formula

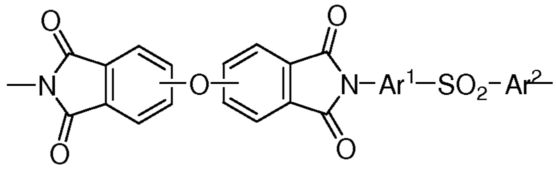

wherein $Ar^1$ and $Ar^2$ are phenyl groups.

Structural units derived from a dianhydride selected from the group consisting of oxydiphthalic anhydride, 3,3, bisphenol A dianhydride, 4,4, bisphenol A dianhydride, and a diamine selected from the group consisting of metaphenylenediamine, para- phenylenediamine, diaminodiphenyl sulfone, oxydianiline have the formula

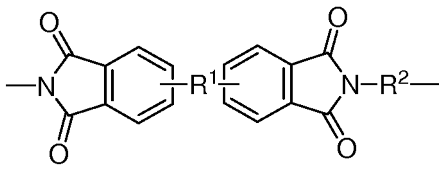.

$R^1$ can be an oxy group or can have one of the following structures

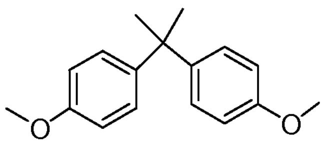 or 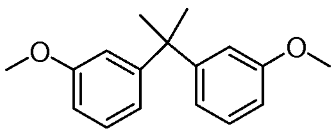.

$R^2$ can have one of the following structures

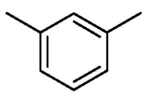, 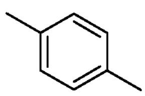, 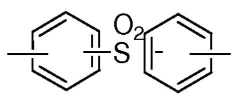, 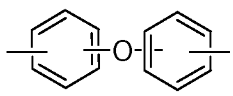.

Structural units derived from a chloro-substituted phthalic anhydride, a diamine selected from the group of meta-phenylenediamine, para- phenylenediamine, diaminodiphenyl sulfone, oxydianiline and combinations thereof, and a dihydroxy phenol salt have the formula

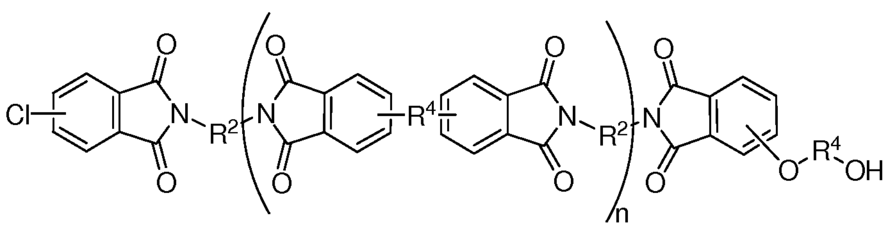

wherein $R^2$ is defined as above and $R^4$ is derived from a dihydroxy phenol. Suitable dihydroxy phenols include those having the formula $OH-A^2-OH$ wherein $A^2$ is a divalent aromatic hydrocarbon radical, such as

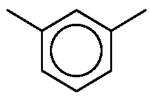 , 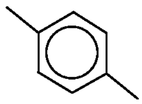 , 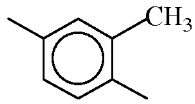 ,

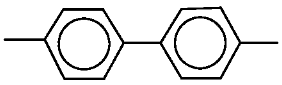 , 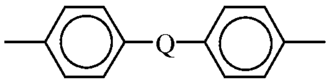 ,

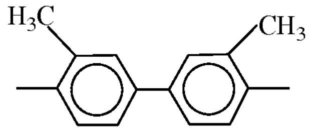 , 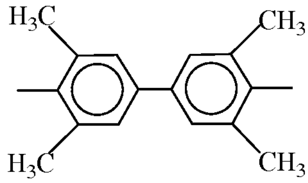 ,

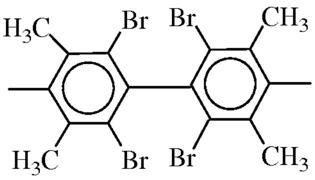 ,

and

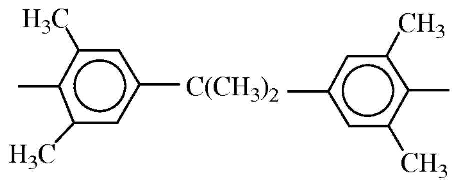

wherein Q includes but is not limited to a divalent moiety including -O-, -S-, -C(O)-,-$SO_2$-, -SO-, -$C_yH_2y$- (y being an integer from 1 to 5), and halogenated derivatives thereof, including perfluoroalkylene groups.

The lens can comprise two polyimide polymers that form a non-delaminated blend. The term "non-delaminated" refers to the property of a composition or an article derived from the composition, in which the article or the composition does not exhibit visually observed separation of a surface layer showing a flaking or onion skin effect. A non-delaminated article may also be referred to herein as "essentially free from delamination."

The first polyimide can be present in an amount of 50 to 99 weight percent; the second polyimide can be present in an amount of 1 to 50 weight percent; and the thermoplastic composition can further comprise 0 to 70 weight percent of a component selected from the group consisting of fillers, reinforcements, additives, and combinations thereof; wherein the first polyimide, the second polyimide, and the component are present at a total weight percent of 100, as long as a lens made from the composition is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds..

When the lens comprises two polyimides the first polyimide polymer can comprise structural units derived from oxydiphthalic anhydride and diaminodiphenyl sulfone; and the second polyimide polymer can comprise structural units derived from a dianhydride/diamine pair selected from the group consisting of (i) 3,3 bisphenol dianhydride and diaminodiphenyl sulfone, (ii) 4,4, bisphenol A dianhydride and metaphenylene diamine, (iii) 4,4, bisphenol A dianhydride and paraphenylenediamine, (iv) 4,4 bisphenol dianhydride and diaminodiphenyl sulfone, and (v) combinations of the dianhydride/diamine pairs (ii)-(iv).

Alternatively, the lens comprises two polyimides the first polyimide polymer can comprise structural units derived from 3,3 bisphenol dianhydride and diaminodiphenyl sulfone; and the second polyimide polymer can comprise structural units derived from a dianhydride/diamine pair selected from the group consisting of (i) 4,4, bisphenol A dianhydride and metaphenylene diamine, (ii) 4,4, bisphenol A dianhydride and para- phenylenediamine, (iii) 4,4 bisphenol dianhydride and diaminodiphenyl sulfone, and (iv) combinations of the dianhydride/diamine pairs (i)-(iii).

It is also contemplated that the lens can further comprise a polymer other than a polyimide. The non-polyimide polymer can be selected from the group consisting of polyesters, polyestercarbonates, polysulfones, polyether sulfones, polybenzimidizole, polyketones, and combinations of the foregoing polymers, as long as a lens made from the blend of polymers is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds. In one embodiment, the composition comprises a polyketone and the polyketone is present in an amount less than 20 weight percent, based on the weight of the composition.

The polymer or polymer blend can have a coefficient of thermal expansion of less than or equal to 100 ppm/°C from 30°C to 200°C as measured by thermal mechanical analysis with a thermal ramp rate of 5°C/minute. (as per ASTM E 831-06)

The polymer or polymer blend can have a continuous use temperature greater than or equal to 150°C.

The colorant component is selected from the group of (a) at least two organic dyes, (b) at least an organic dye and an organic pigment, (c) at least two organic pigments, and (d) combinations thereof.

In one embodiment the colorant comprises at least two organic dyes. The at least two organic dyes are selected to provide a desired black color. Suitable dye classes from which the at least two organic dyes can be selected include anthraquinones, anthrapyridones, perylenes, anthracenes, perinones, indanthrones, quinacridones, xanthenes, thioxanthenes, oxazines, oxazolines, indigoids, thioindigoids, quinophthalones, naphthalimides, cyanines, methines, pyrazolones, lactones, coumarins, bis-benzoxazolylthiophenes, naphthalenetetracarboxylic acids, phthalocyanines, triarylmethanes, aminoketones, bis(styryl)biphenyls, azines, rhodamines, derivatives of the foregoing, and mixtures thereof. The at least two organic dyes can be selected from the group consisting of (i) a mixture comprising a green organic dye and a red organic dye, (ii) a mixture comprising an orange organic dye, blue organic dye, and red organic dye (iii) a mixture comprising a purple organic dye, a yellow organic dye and a blue organic dye, and (iv) combinations thereof.

In some embodiments, the at least two organic dyes comprise at least one dye combination selected from the group consisting of a solvent red dye and a solvent green dye, a solvent violet dye and a solvent yellow dye or disperse yellow dye, and a solvent orange dye and a solvent blue dye. The at least two organic dyes can comprise at least two of the dye combinations, or at least three such dye combinations.

In some embodiments, the at least two organic dyes comprise at least one dye combination selected from the group consisting of a solvent, disperse or vat red dye and a solvent or disperse green dye, a solvent or disperse violet dye and a solvent or disperse blue dye, a solvent, disperse or vat red dye and a solvent or disperse blue dye, a solvent or disperse yellow dye and a solvent or disperse blue, a solvent or disperse orange dye and solvent or disperse blue dye. The at least two organic dyes can comprise at least two of the dye combinations, or at least three such dye combinations.

Specific organic dyes and organic pigments suitable for use among the at least two organic dyes include Disperse Yellow 54, Disperse Yellow 201, Solvent Yellow 33, Solvent Yellow 63, Solvent Yellow 93, Solvent Yellow 98, Solvent Yellow 104, Solvent Yellow 114, Solvent yellow 160, Solvent Yellow 188, Pigment Yellow 110, Pigment Yellow 138, Pigment Yellow 147, Pigment Yellow 180, Pigment Yellow 183, Pigment Yellow 184 Solvent Green 3, Solvent Green 28, Pigment Green 7, Pigment Green 36, Solvent Red 52, Solvent Red 135, Solvent Red 149, Solvent Red 179, Solvent Red 207, Vat Red 41, Pigment Red 122, Pigment Red 149, Pigment Red 178, Pigment Red 181, Pigment Red 202, Pigment Red 254, Solvent Violet 13, Solvent Violet 36, Disperse Violet 26, Disperse Violet 31, Pigment Violet 19, Disperse Orange 47, Solvent Orange 60, Solvent Orange 63, Solvent Orange 60, Solvent Orange 63, Solvent Orange 64, Pigment Orange 71 and Solvent Blue 97, Solvent Blue 104, Pigment Blue 15, !5:1, 15:2 15:3 & 15:4, Pigment Blue 60. Other dyes and pigments are possible.

The total concentration of the at least two organic dyes is greater than or equal to 0.001 weight percent, based on the total weight of the thermoplastic composition, more specifically in an amount greater than or equal to 0.02 weight percent, even more specifically in an amount greater or equal than 0.12 weight percent. Those skilled in the art can select relative amounts of particular dyes or pigments. For example, when the at least two organic dyes comprise two dyes from opposite sides of the color wheel, the weight ratio of the two dyes can be about 0.5 to 2, specifically about 0.7 to about 1.5, more specifically about 1:1. Also, when the at least two organic dyes comprise two dyes from opposite sides of the color wheel, the weight ratio of the two dyes can be about 0.1 to 10, specifically about 0.7 to about 1.5, more specifically about 1:1

In some embodiments the at least two organic pigments is selected from the group consisting of (i) mixtures comprising a green organic pigments and a red organic pigment, (ii) mixtures comprising an orange organic pigments, blue organic pigments, and red organic pigments (iii) mixtures comprising a purple organic pigment, a yellow organic pigment and a blue organic pigment, (iv) mixtures comprising blue organic pigments, yellow organic pigments, and red organic pigments and (v) combinations thereof.

In some embodiments the at least two organic pigments is selected from the group consisting of (i) mixtures comprising a green organic pigments and a red organic pigment, (ii) mixtures comprising a blue organic pigment and a

red organic pigment, (iii) mixtures comprising an orange organic pigments, blue organic pigments, and red organic pigments (iii) mixtures comprising a yellow organic pigment, a blue organic pigment and a red organic pigment, (iv) mixtures comprising a purple organic pigment and a blue organic pigment, (v) mixtures comprising an orange organic pigment, purple organic pigment and a blue organic pigments, (vi) mixtures comprising a yellow organic pigment, a purple organic pigment and a blue organic pigment and (vii) combinations thereof.

In some embodiments the at least one organic dye and an organic pigment is selected from the group of (i) mixtures comprising a green organic pigments and a red organic dyes, (ii) mixtures comprising a green organic dyes and a red organic pigments, (iii) mixtures comprising an orange dye, a blue organic pigment, and red organic dyes, (iv) mixtures comprising an orange organic dyes, blue organic dyes, and red organic pigments, and (v) mixtures comprising an orange organic pigments, blue organic dyes, and red organic dyes, and (vi) mixtures comprising a purple organic dyes, a yellow organic dyes and a blue organic pigments, and (iv) combinations thereof.

In some embodiments the at least one organic dye and an organic pigment is selected from the group of (i) mixtures comprising a green organic pigments and a red organic dyes, (ii) mixtures comprising a green organic dyes and a red organic pigments, (iii) mixtures comprising a blue organic pigment and a red organic dye, (iv) mixtures comprising a blue organic dye and a red organic pigment, (v) mixtures of a yellow organic pigment, a blue organic dye and a red organic dye, (vi) mixtures a yellow organic pigment, a blue organic pigment and a red organic dye, (vii) mixtures a yellow organic pigment, a blue organic dye and a red organic pigment, (viii) mixtures a yellow organic dye, a blue organic pigment and a red organic pigment, (ix) mixtures a yellow organic dye, a blue organic dye and a red organic pigment, (x) mixtures a yellow organic dye, a blue organic pigment and a red organic dye, (xi) mixtures comprising a purple organic pigment and a blue dye, (xii) mixtures comprising a purple organic dye and a blue organic pigment, (xiii) mixtures comprising an orange organic pigment, a purple organic pigment and a blue organic dye, (xiv) mixtures comprising an orange organic pigment, a purple organic dye and a blue organic pigment, (xv) mixtures comprising an orange organic dye, a purple organic pigment and a blue organic pigment, (xvi) mixtures comprising an orange organic dye, a purple organic dye and a blue organic pigment, (xvii) mixtures comprising an orange organic dye, a purple organic pigment and a blue organic dye, (xviii) mixtures comprising a yellow organic pigment, a blue organic pigment and a red organic dye, (xix) mixtures comprising a yellow pigment, a blue dye and a red pigment, (xx) mixtures comprising a yellow organic dye, a blue organic pigment and a red organic pigment, (xxi) mixtures comprising a yellow dye, a blue organic pigment, and red organic dyes, (xxii) mixtures comprising a yellow organic dye, blue organic dyes, and red organic pigments, and (xxiii) combinations thereof.

Also disclosed herein is an article comprising a concave lens comprising a polymer and a colorant component wherein the lens has a width of 0.1 millimeter to 10 millimeter, a length of 0.1 millimeter to 50 millimeters, and a thickness of 0.2 millimeter to 5 millimeter; wherein the lens transmits light having a wavelength of 850 nanometers to 1550 nanometers and does not transmit light at a wavelength of 380 to 760 nm wherein the colorant component comprises at least two organic dyes such as a green dye and a red dye, an orange dye and blue dye or a purple dye and a yellow dye, and the polymer comprises a polyimide comprising structural units derived from

(A) a dianhydride/diamine pair wherein the pair comprises

(i) oxydiphthalic anhydride and diaminodiphenylsulfone,
(ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para- phenylenediamine, diaminodiphenyl sulfone, oxydianiline, and combinations of the foregoing diamines,

(B) a chloro-substituted phthalic anhydride, a diamine selected from the group consisting of meta-phenylenediamine, para- phenylenediamine, diaminodiphenyl sulfone, oxydianiline, dihydroxy phenol salts, and combinations thereof; or (C) a combination of (A) and (B); and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

Also disclosed herein is an article comprising a concave lens comprising a polymer and a colorant component wherein the lens has a width of 0.1 millimeter to 10 millimeter, a length of 0.1 millimeter to 50 millimeters, and a thickness of 0.2 millimeter to 5 millimeter; wherein the lens transmits light having a wavelength of 850 nanometers to 1550 nanometers and transmit light less than 20% at a wavelength of 380 to 700 nm and greater than zero percent at wavelength of 670 to 760 nm wherein the colorant component comprises at least two organic dyes such as a green dye and a red dye, an red dye and blue dye or a purple dye and a blue dye, and the polymer comprises a polyimide comprising structural units derived from

(A) a dianhydride/diamine pair wherein the pair comprises

(i) oxydiphthalic anhydride and diaminodiphenylsulfone,
(ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para- phenylenediamine, diaminodiphenyl sulfone, oxydianiline, and combinations of the foregoing diamines,

(B) a chloro-substituted phthalic anhydride, a diamine selected from the group consisting of meta-phenylenediamine, para- phenylenediamine, diaminodiphenyl sulfone, oxydianiline, dihydroxy phenol salts, and combinations thereof; or
(C) a combination of (A) and (B); and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

Although our invention includes embodiments that are lenses comprising polyimides, it is understood that our invention can include lenses made from high heat polymers. As such, in one embodiment, our invention includes an article comprising a lens having a width of 0.1 millimeters to 100 millimeters, a length of 0.5 millimeters to 500 millimeters, and a thickness of 0.2 millimeters to 5 millimeters; and the lens (i) transmits more than 60% of light having a wavelength of 760 nanometers to 2500 nanometers, (ii) transmits less than 15% of light having a wavelength of 380 to 700 nm and (iii) transmits more than 15% of light having a wavelength of more than 700 to 760 nm, wherein the lens comprises a polymer and a colorant component, and the polymer comprises:

a high heat polymer having a glass transition temperature that is more than 180 C, the high heat polymer selected from the group consisting of polyimides, polyphenylene sulfones, polyethersulfones, polysulfones, and polyetheretherketone, and combinations thereof;
and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

In one embodiment, our invention includes an article comprising a lens having a width of 0.1 millimeters to 100 millimeters, a length of 0.5 millimeters to 500 millimeters, and a thickness of 0.2 millimeters to 5 millimeters; and the lens (i) transmits more than 60% of light having a wavelength of 760 nanometers to 2500 nanometers, (ii) transmits less than 20% of light having a wavelength of 380 to 700 nm and (iii) transmits more than zero percent of light having a wavelength of more than 670 to 760 nm, wherein the lens comprises a polymer and a colorant component, and the polymer comprises:

a high heat polymer having a glass transition temperature that is more than 180 C, the high heat polymer selected from the group consisting of polyimides, polyphenylene sulfones, polyethersulfones, polysulfones, and polyetheretherketone, and combinations thereof;
and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

Lenses of our invention can be made by any suitable method. For instance, in one embodiment, lenses can be made by injection molding techniques, where the appropriate composition is melted and subjected to injection molding conditions that result in a lens that is within the parameters of our invention. In other embodiments, lenses can be made by film pressing techniques. Lenses can be subjected to suitable polishing and finishing techniques that may be appropriate the need at hand. Details of such processes, polishing techniques, and finishing techniques are evident with routine experimentation.

Embodiment 1: An article comprising a lens having a width of 0.1 millimeters to 100 millimeters, a length of 0.5 millimeters to 500 millimeters, and a thickness of 0.2 millimeters to 5 millimeters; and the lens transmits more than 60% of light having a wavelength ranging from 760 nanometers to 2500 nanometers, and the polymer comprises: a high heat polymer having a glass transition temperature that is more than 180°C, the high heat polymer selected from the group consisting of polyimides, polyphenylene sulfones, polyethersulfones, polysulfones, and polyetheretherketones, and combinations thereof; and the colorant component selected from the group of (a) at least two organic dyes, (b) at least an organic dye and an organic pigment, (c) at least two organic pigments, and (d) combinations thereof and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

Embodiment 2: The article of Embodiment 1, wherein the lens transmits less than 20% of light having a wavelength selected from the group consisting of 380 to 670 nm, 380 to 671 nm, 380 to 672 nm, 380 to 673 nm, 380 to 674 nm, 380 to 675 nm, 380 to 676 nm, 380 to 677 nm, 380 to 678 nm, 380 to 679 nm, 380 to 680 nm, 380 to 681 nm, 380 to 682 nm, 380 to 683 nm, 684 nm, 380 to 685 nm, 380 to 686 nm, 380 to 687 nm, 380 to 688 nm, 380 to 689 nm, 380 to 690 nm, 380 to 691 nm, 380 to 692 nm, 380 to 693 nm, 380 to 694 nm, 380 to 695 nm, 380 to 696 nm, 380 to 697 nm, 380 to 698 nm, 380 to 700 nm, and combinations thereof.

Embodiment 3: The article of Embodiment 1 or 2, wherein the lens transmits more than 5% of light having a wavelength selected from the group consisting of from more than 670 to 760 nm, 671 to 760 nm, 672 to 760 nm, 673 to 760 nm, 673 to 760 nm, 673 to 760 nm, 674 to 760 nm, 675 to 760 nm, 676 to 760 nm, 677 to 760 nm, 678 to 760 nm, 679 to 760 nm, 680 to 760 nm, 681 to 760 nm, 682 to 760 nm, 683 to 760 nm, 684 to 760 nm, 685 to 760 nm, 686 to 760 nm, 687 to 760 nm, 688 to 760 nm, 689 to 760 nm, 690 to 760 nm, 691 to 760 nm, 692 to 760 nm, 693 to 760 nm, 694 to 760 nm, 695 to 760 nm, 696 to 760 nm, 697 to 760 nm, 698 to 760 nm, 699 to 760 nm, 700 to 760 nm, and combinations thereof.

Embodiment 4: The article of Embodiment 1, wherein the lens selectively transmits light from a member selected from the group consisting of: (1) less than 20% of light having a wavelength of 380 to 670 nm and more than 5% of light having a wavelength of from more than 670 to 760 nm, (2) less than 20% of light having a wavelength of 380 to 671 nm, and more than 5% of light having a wavelength of from more than 671 to 760 nm, (3) less than 20% of light having a wavelength of 380 to 672 nm and more than 5% of light having a wavelength of from more than 672 to 760 nm, (4) less than 20% of light having a wavelength of 380 to 673 nm, and more than 5% of light having a wavelength of from more than 673 to 760 nm, (5) less than 20% of light having a wavelength of 380 to 674 nm, and more than 5% of light having a wavelength of from more than 674 to 760 nm (6) less than 20% of light having a wavelength of 380 to 675 nm, and more than 5% of light having a wavelength of from more than 675 to 760 nm, (7) less than 20% of light having a wavelength of 380 to 676 nm, and more than 5% of light having a wavelength of from more than 676 to 760 nm, (8), less than 20% of light having a wavelength of 380 to 677 nm, and more than 5% of light having a wavelength of from more than 677 to 760 nm, (9) less than 20% of light having a wavelength of 380 to 678 nm, and more than 5% of light having a wavelength of from more than 678 to 760 nm, (10) less than 20% of light having a wavelength of 380 to 679 nm, and more than 5% of light having a wavelength of from more than 679 to 760 nm, (11) less than 20% of light having a wavelength of 380 to 680 nm, and more than 5% of light having a wavelength of from more than 680 to 760 nm, (12) less than 20% of light having a wavelength of 380 to 681 nm, and more than 5% of light having a wavelength of from more than 681 to 760 nm, (13) less than 20% of light having a wavelength of 380 to 682 nm, and more than 5% of light having a wavelength of from more than 682 to 760 nm, (14) less than 20% of light having a wavelength of 380 to 683 nm, and more than 5% of light having a wavelength of from more than 683 to 760 nm, (15) less than 20% of light having a wavelength of 684 nm and more than 5% of light having a wavelength of from more than 684 to 760 nm, (16) less than 20% of light having a wavelength of 380 to 685 nm, and more than 5% of light having a wavelength of from more than 685 to 760 nm, (17) less than 20% of light having a wavelength of 380 to 686 nm, and more than 5% of light having a wavelength of from more than 686 to 760 nm, (18) less than 20% of light having a wavelength of 380 to 687 nm, and more than 5% of light having a wavelength of from more than 687 to 760 nm, (19) less than 20% of light having a wavelength of 380 to 688 nm, and more than 5% of light having a wavelength of from more than 688 to 760 nm, (20) less than 20% of light having a wavelength of 380 to 689 nm, and more than 5% of light having a wavelength of from more than 689 to 760 nm, (21) less than 20% of light having a wavelength of 380 to 690 nm, and more than 5% of light having a wavelength of from more than 690 to 760 nm, (22) less than 20% of light having a wavelength of 380 to 691 nm, and more than 5% of light having a wavelength of from more than 691 to 760 nm, (23) less than 20% of light having a wavelength of 380 to 692 nm, and more than 5% of light having a wavelength of from 692 to 760 nm, (24) less than 20% of light having a wavelength of 380 to 693 nm, and more than 5% of light having a wavelength of from 693 to 760 nm, (25) less than 20% of light having a wavelength of 380 to 694 nm, and more than 5% of light having a wavelength of from 694 to 760 nm, (26) less than 20% of light having a wavelength of 380 to 695 nm, and more than 5% of light having a wavelength of from 695 to 760 nm, (27) less than 20% of light having a wavelength of 380 to 696 nm, and more than 5% of light having a wavelength of from 696 to 760 nm, (28) less than 20% of light having a wavelength of 380 to 697 nm, and more than 5% of light having a wavelength of from 697 to 760 nm, (29) less than 20% of light having a wavelength of 380 to 698 nm, and more than 5% of light having a wavelength of from 698 to 760 nm, (30) less than 20% of light having a wavelength of 380 to 699 nm, and more than 5% of light having

a wavelength of from 699 to 760 nm, (31) less than 20% of light having a wavelength of 380 to 700nm, and more than 5% of light having a wavelength of from 700 to 760 nm, and combinations thereof.

Embodiment 5: An article comprising a lens having a width of 0.1 millimeters to 100 millimeters, a length of 0.5 millimeters to 500 millimeters, and a thickness of 0.2 millimeters to 5 millimeters; and the lens (i) transmits more than 60% of light having a wavelength of 760 nanometers to 2500 nanometers, wherein the lens comprises a polymer and a colorant component, and the polymer comprises: a polyimide comprising structural units derived from (A) a dianhydride/diamine pair wherein the pair comprises (i) oxydiphthalic anhydride and diaminodiphenylsulfone, or (ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of metaphenylenediamine, para- phenylenediamine, diaminodiphenyl sulfone, oxydianiline, and combinations of the foregoing diamines, (B) a chloro-substituted phthalic anhydride, a diamine selected from the group of meta-phenylenediamine, para-phenylenediamine, diaminodiphenyl sulfone, oxydianiline and combinations thereof, and a dihydroxy phenol salt, or (C) a combination selected from the group of (A) and (B); and the colorant component is selected from the group of (a) at least two organic dyes, (b) at least an organic dye and an organic pigment, (c) at least two organic pigments, and (d) combinations thereof and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

Embodiment 6: The article of Embodiment 5, wherein the article transmits less than 15% of light having a wavelength of 380 to 700 nm and transmits more than 15% of light having a wavelength of greater than 700 to 760 nm.

Embodiment 7: The article of any of Embodiments 1 to 6, wherein the at least two organic dyes is selected from the group consisting of (i) a mixture comprising a green organic dye and a red organic dye, (ii) a mixture comprising an orange organic dye, blue organic dye, and red organic dye (iii) a mixture comprising a purple organic dye, a yellow organic dye and a blue organic dye, and (iv) combinations thereof.

Embodiment 8. The article of any of Embodiments 1 to 6, wherein the at least one organic dye and an organic pigment is selected from the group of (i) mixtures comprising a green organic pigments and a red organic dyes, (ii) mixtures comprising a green organic dyes and a red organic pigments, (iii) mixtures comprising an orange dyes, blue organic pigments, and red organic dyes, (iv) mixtures comprising an orange organic dyes, blue organic dyes, and red organic pigments, and (v) mixtures comprising an orange organic pigments, blue organic dyes, and red organic dyes, and, and (vi) mixtures comprising a purple organic dyes, a yellow organic dyes and a blue organic pigments, and (iv) combinations thereof.

Embodiment 9: The article of any of Embodiments 1 to 6, wherein the at least two organic pigments is selected from the group of (i) mixtures comprising a green organic pigments and a red organic pigment, (ii) mixtures comprising an orange organic pigments, blue organic pigments, and red organic pigments (iii) mixtures comprising a purple organic pigment, a yellow organic pigments and a blue organic pigments, (iv) mixtures comprising blue organic pigments, yellow organic pigments, and red organic pigments and (v) combinations thereof.

Embodiment 10: The article of Embodiment 5, wherein the polyimide comprises structural units derived from oxydiphthalic anhydride and diaminodiphenyl sulfone,

Embodiment 11: The article of Embodiment 5, wherein the polyimide comprises structural units derived from 3,3, bisphenol A dianhydride and diaminodiphenyl sulfone,

Embodiment 12: The article of Embodiment 5, wherein the polyimide comprises structural units derived from oxydiphthalic anhydride and 4,4'-oxydianiline,

Embodiment 13: The article of Embodiment 5, wherein the polyimide is a first polyimide polymer and the lens further comprises a second polyimide polymer, thereby forming a polymer blend, and the polymer blend is a non-delaminated miscible polymer blend.

Embodiment 14: The article of Embodiment 13, wherein the first polyimide polymer comprises structural units derived from oxydiphthalic anhydride and diaminodiphenyl sulfone; and the second polyimide polymer comprises structural units derived from a dianhydride/diamine pair selected from the group consisting of (i) 3,3 bisphenol dianhydride and diaminodiphenyl sulfone, (ii) 4,4, bisphenol A dianhydride and metaphenylene diamine, (iii) 4,4, bisphenol A dianhydride and para-phenylenediamine, (iv) 4,4 bisphenol dianhydride and diaminodiphenyl sulfone, and (v) combinations of the foregoing dianhydride/diamine pairs.

Embodiment 15: The article of Embodiment 13, wherein the first polyimide polymer comprises structural units derived from 3,3 bisphenol dianhydride and diaminodiphenyl sulfone; and the second polyimide polymer comprises structural units derived from a dianhydride/diamine pair selected from the group consisting of (i) 4,4, bisphenol A dianhydride and metaphenylene diamine, (ii) 4,4, bisphenol A dianhydride and para- phenylenediamine, (iii) 4,4 bisphenol dianhydride and diaminodiphenyl sulfone, and (iv) combinations of the forgoing dianhydride/diamine pairs.

Embodiment 16: The article of Embodiment 13, wherein the first polyimide is present in an amount of 50 to 99 weight percent; the second polyimide is present in an amount of 1 to 50 weight percent; and the thermoplastic composition

further comprises 0 to 70 weight percent of a component selected from the group consisting of fillers, reinforcements, additives, and combinations thereof; wherein the first polyimide, the second polyimide, and the component are present at a total weight percent of 100.

Embodiment 17: The article of Embodiment 5, wherein the composition further comprises at least one polymer that is not a polyimide.

Embodiment 18: The article of Embodiment 17, wherein the at least one polymer is selected from the group consisting of polyesters, polyestercarbonates, polysulfones, polyether sulfones, polybenzimidizole, polyketones, and combinations of the foregoing polymers.

Embodiment 19: The article of Embodiment 5, wherein the lens has a transparency that is greater than or equal to 60% at a thickness of 2 millimeters.

Embodiment 20: The article of Embodiment 5, wherein the lens transmits light having a wavelength of 1310 nanometers.

Embodiment 21: The article of Embodiment 5, wherein the lens transmits light having a wavelength of 1550 nanometers.

Embodiment 22: The article of Embodiment 5, wherein the lens transmits light having a wavelength of 850 nanometers.

Embodiment 23: The article of Embodiment 5, wherein the polymer has a coefficient of thermal expansion of less than or equal to 100 ppm/°C from 30°C to 200°C as measured by thermal mechanical analysis with a thermal ramp rate of 5°C/minute.

Embodiment 24: The article of Embodiment 5, wherein the polymer blend has a continuous use temperature greater than or equal to 150°C.

Embodiment 25: The article of Embodiment 5, wherein the lens is also transparent and dimensionally stable at a wall thickness of 0.2 millimeters to 5.0 millimeters after being (a) exposed to a precondition of 85°C/85% relative humidity for 120 hours and (b) subjected to a lead free solder test for 30 seconds at 260°C

Embodiment 26: The article of Embodiment 5 wherein the article is a component of an optical transreceiver.

Embodiment 27: The article of Embodiment 13 wherein the article is a component of an optical transreceiver.

Embodiment 28: The article of Embodiment 5, wherein the lens further comprises less than 20 weight% of a polyketone, based on the total weight of the composition.

Embodiment 29: An article comprising a concave lens wherein the lens has a width of 0.1 millimeter to 100 millimeter, a length of 0.5 millimeter to 500 millimeters, and a thickness of 0.2 millimeter to 5 millimeter; wherein and the lens transmits more than 60% of light having a wavelength ranging from 760 nanometers to 2500 nanometers, wherein the lens comprises a polymer and a colorant component and the polymer comprises a polyimide comprising structural units derived from (A) a dianhydride/diamine pair wherein the pair comprises (i) oxydiphthalic anhydride and diaminodiphenylsulfone, or (ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para- phenylenediamine, iaminodiphenyl sulfone, oxydianiline, and combinations of the foregoing diamines, (B) a chloro-substituted phthalic anhydride, a diamine selected from the group consisting of meta-phenylenediamine, para- phenylenediamine, diaminodiphenyl sulfone, oxydianiline and combinations thereof, and a dihydroxy phenol salts, or (C)) a combination selected from the group of (A) and (B); the colorant comprises at least two organic dyes such as a green dye and a red dye, an orange dye and blue dye or a purple dye and a yellow dye and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

Embodiment 30: The article of Embodiment 29, wherein the article is a component of a optical transceiver.

The following examples are included to provide additional guidance to those skilled in the art. The examples provided are merely representative are not intended to limit the invention, as defined in the appended claims, in any manner.

## EXAMPLES

### EXAMPLES 1-30

The purpose of Examples 1-30 was to determine the surface mount capability of different polyimide materials, per the Joint Electronic Device Engineering Council (JEDEC) standard test protocol described below.

The materials used in Examples 1-30 are shown below in Table 1.

Table 1

| | Monomers | Source, Vendor |
|---|---|---|
| Polyimide 1 | Bisphenol A dianhydride and m-phenylene diamine | SABIC INNOVATIVE PLASTICS* |
| Polyimide 2 | 3-chlorophthalic anhydride, bisphenol- A and diaminodiphenyl sulfone | SABIC INNOVATIVE PLASTICS* |
| Polyimide 3 | Oxydiphthalic anhydride and diaminodiphenyl sulfone | SABIC INNOVATIVE PLASTICS* |
| Polyimide 4 | 4,4-Bisphenol A dianhydride and diaminodiphenyl sulfone | SABIC INNOVATIVE PLASTICS* |
| Solvent Green 3 | Not applicable | |
| Solvent Red 179 | Not applicable | |
| Carbon black | Not applicable | |
| *Commercially sold by SABIC Innovative Plastic under the marks of ULTEM and EXTEM. | | |

LENS PREPARATION METHODS

Samples in the form of lenses were made by injection molding the respective compositions. The lenses were molded into varying thickness from 0.1 mm- 3.2 mm.

TESTING PROTOCOLS

The lenses were subjected to lead free solder test temperature profile, according to IPC/JEDEC J-STD-202C entitled "Moisture/Reflow Sensitivity Classification for Non-hermetic Solid State Surface Mount Devices."

The molded samples in the form of lenses having varying thickness ranging from 0.1 mm to 3.2 mm were conditioned in a humidity chamber at 60°C/60 RH (Relative Humidity) for the specified number of hours shown in the tables. These samples were then mounted on a oven chamber simulating a lead free solder surface mount technology (SMT) process according to the IPC/JEDEC J-STD-202C thermal profile.

The transmission is measured at varying wavelengths using spectrophotometer. Transmission was measured at 850, 1310 and 1550 nm, respectively. A sample was deemed to pass the JEDEC standard protocol when the lens was transparent and dimensionally stable at a wall thickness of at least 0.1 millimeters to 5.0 millimeters and remains transparent and dimensionally stable (no distortion) after being (a) exposed to a precondition of 60°C/60% relative humidity for 120 hours and (b) then subjected to a lead free solder test having a peak temperature of 260°C for up to 30 seconds.

For Examples 1-12, lenses were made using Polyimide 2 described in Table 1. The lenses were tested for their dimensional stability as described above. Results are also shown in the Tables 2-3.

Table 2

| | Example No | 1 | 2 | 3 | 4 | 5 | 6 |
|---|---|---|---|---|---|---|---|
| | Sample | Polyimide 2 | Polyimide 2 | Polyimide 2 | Polyimide 2 | Polyimide 2 | Polyimide 2 |
| Lead Free Solder Reflow Test | Thickness (mm) | 0.4 | 0.8 | 1.2 | 1.6 | 2 | 3.2 |
| | Conditions (RH/temp)* | Dry | Dry | Dry | Dry | Dry | Dry |
| | Peak temperature | 260 | 260 | 260 | 260 | 260 | 260 |
| | Lead Free Solder Reflow Test Results | Pass | Pass | Pass | Pass | Pass | Pass |

(continued)

| | Example No | 1 | 2 | 3 | 4 | 5 | 6 |
|---|---|---|---|---|---|---|---|
| Transmission Test | Transmission at 850 nm, % | >72 | >72 | >72 | 69 | 68 | 50 |
| | Transmission at 1310 nm, % | >85 | >85 | >85 | 83 | 82 | 77 |
| | Transmission at 1550 nm, % | >85 | >85 | >85 | 83 | 82 | 77 |
| * Conditioning temperature was 150 °C | | | | | | | |

Table 3

| | Example No | 7 | 8 | 9 | 10 | 11 | 12 |
|---|---|---|---|---|---|---|---|
| | Sample | Polyimide 2 | Polyimide 2 | Polyimide 2 | Polyimide 2 | Polyimide 2 | Polyimide 2 |
| Lead Free Solder Reflow Test | Thickness (mm) | 0.4 | 0.8 | 1.2 | 0.4 | 0.8 | 1.2 |
| | conditions (RH/temp) | 60/60 | 60/60 | 60/60 | 85/85 | 85/85 | 85/85 |
| | Peak temperature | 260 | 260 | 260 | 260 | 260 | 260 |
| | Lead Free Solder Reflow Test Results | Pass | Pass | Pass | Pass | Pass | Pass |
| Transmission Test | Transmission at 850 nm, % | >72 | >72 | >72 | >72 | >72 | >72 |
| | Transmission at 1310 nm, % | >85 | >85 | >85 | >85 | >85 | >85 |
| | Transmission at 1550 nm, % | >85 | >85 | >85 | >85 | >85 | >85 |

DISCUSSION OF EXAMPLES 1-12

Our results showed that the lens passed the JEDEC protocol, namely that the lens was transparent and dimensionally stable at a wall thickness of at least 0.2 millimeters to 5 millimeters and remained transparent and dimensionally stable after being (a) exposed to a precondition of 60°C/60% relative humidity for 120 hours and (b) then subjected to a lead free solder test having a peak temperature of 260°C for up to 30 seconds.

EXAMPLES 13-18

For Examples 13-18, lenses were made using Polyimide 3 described in Table 1. The lenses were tested for their dimensional stability as described above. Results are shown in the Table 4.

Table 4

| | Example No | 13 | 14 | 15 | 16 | 17 | 18 |
|---|---|---|---|---|---|---|---|
| | Sample | Polyimide 3 | Polyimide 3 | Polyimide 3 | Polyimide 3 | Polyimide 3 | Polyimide 3 |
| Lead Free Solder Reflow Test | Thickness (mm) | 1.6 | 2 | 3.2 | 1.6 | 2 | 3.2 |
| | Conditions (RH/temp) | Dry* | Dry* | Dry* | 60/60 | 60/60 | 60/60 |
| | Peak temperature | 260 | 260 | 260 | 260 | 260 | 260 |
| | Lead Free Solder Reflow Test Results | Pass | Pass | Pass | Pass | Pass | Pass |
| Transmission Test | Transmission at 850 nm, % | >70 | 65 | 60 | >70 | 65 | 60 |
| | Transmission at 1310 nm, % | >82 | 81 | 81 | >82 | 81 | 81 |
| | Transmission at 1550 nm, % | >82 | 81 | 81 | >82 | 81 | 81 |
| * Conditioning temperature was 150 °C | | | | | | | |

DISCUSSION OF EXAMPLES 13-18

Our results showed that the lens passed the JEDEC protocol- the lens was transparent and dimensionally stable at a wall thickness of at least 0.2 millimeters to 5.0 millimeters and remained transparent and dimensionally stable after being (a) exposed to a precondition of 60°C/60% relative humidity for 120 hours and (b) then subjected to a lead free solder test having a peak temperature of 260°C for up to 30 seconds.

EXAMPLES 19-24

For Examples 19-24, lenses were made in accordance to the compositions indicated in Table 5. The lenses were tested for their dimensional stability as described above. Results are also shown in Table 5

Table 5

| | Example No | 19 | 20 | 21 | 22 | 23 | 24 |
|---|---|---|---|---|---|---|---|
| | Sample | Polyimide 3/Polyimide 4 60/40 wt% | Polyimide 3/Polyimide 4 60/40 wt% | Polyimide 3/Polyimide 4 60/40 wt% | Polyimide 3/Polyimide 4 60/40 wt% | Polyimide 3/Polyimide 2 60/40 wt% | Polyimide 3/Polyimide 2 60/40 wt% |
| Lead Free Solder Reflow Test | Thickness (mm) | 1.6 | 3.2 | 1.6 | 3.2 | 1.6 | 3.2 |
| | Conditions (RH/temp) | Dry* | Dry* | 60/60 | 60/60 | 60/60 | 60/60 |
| | Peak temperature | 260 | 260 | 260 | 260 | 260 | 260 |
| | Lead Free Solder Reflow Test Results | Pass | Pass | Pass | Pass | Pass | Pass |
| Transmission Test | Transmission at 850 nm, % | 76 | 66 | 76 | 66 | 66 | 55 |
| | Transmission at 1310 nm, % | 85 | 84 | 85 | 84 | 82 | 79 |
| | Transmission at 1550 nm, % | 84 | 82 | 84 | 82 | 82 | 79 |

*Conditioning temperature was 150 °C

DISCUSSION OF EXAMPLES 19-24

Our results showed that the lens passed the JEDEC protocol - lenses were transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

EXAMPLES 25-28

For Examples 25-28, lenses were made Polyimide 1 described in Table 1. The lenses were tested for their dimensional stability as described above. Results are shown in Table 8.

Table 8

| | Example No | 25 | 26 | 27 | 28 |
|---|---|---|---|---|---|
| | Sample | Polyimide 1 | Polyimide 1 | Polyimide 1 | Polyimide 1 |
| Lead Free Solder Reflow Test | Thickness (mm) | 1.6 | 3.2 | 1.6 | 3.2 |
| | conditions (RH/temp) | Dry* | Dry* | 60/60 | 60/60 |
| | Peak temperature | 260 | 260 | 260 | 260 |
| | Lead Free Solder Reflow Test Results | FAIL | FAIL | FAIL | FAIL |
| Transmission Test | Transmission at 850 nm, % | 86 | 67 | 86 | 67 |
| | Transmission at 1310 nm, % | 88 | 87 | 88 | 87 |
| | Transmission at 1550 nm, % | 87 | 85 | 87 | 85 |
| *Conditioning temperature was 150 °C | | | | | |

DISCUSSION OF EXAMPLES 25-28

Inexplicably, the compositions containing Polyimide 1 did not result in compositions having useful properties. More particularly, results showed that lenses made from Polyimide 1 were not both transparent and dimensionally stable at a wall thickness of at least 0.2 millimeters to 5.0 millimeters and remain transparent and dimensionally stable after being (a) exposed to a precondition of 60°C/60% relative humidity for 120 hours and (b) then subjected to a lead free solder test having a peak temperature of 260°C for up to 30 seconds.

EXAMPLES 29-34

Examples having the compositions shown in Table 9 were made and tested as described below.

Table 9

| | 29 | 30 | 31* | 32 | 33* | 34 |
|---|---|---|---|---|---|---|
| Polyimide 3 | 100 | 99.88 | 99.7 | - | - | - |
| Polyimide 1 | - | - | | 100 | 100 | 99.6 |
| Carbon Black | - | - | 0.3 | | 0.4 | |
| C.I. Solvent Green 3 | - | 0.06 | - | - | - | 0.2 |
| C.I. Solvent Red 179 | - | 0.06 | - | - | - | 0.2 |

Examples 29 and 32 are natural polyimide with no pigment added. Examples 30 and 34 contain polyimides with two organic dyes, as shown in Table 9. These examples are intended to compare and contrast the optical properties of natural uncolored polymer and organic dye added polymer. Comparative examples 31 and 33 contain carbon black pigment.

Extrusion and molding:

Components of each sample according to formulae above were dryblended for 3-5 minutes to ensure even distribution of dyes into the resin. Examples 29-31 were then fed at the feed-throat of a WP30 co-rotating twin screw extruder. Examples 32-34 were fed at the feed-throat of Prizm extruder (25 mm twin extruder model TSE24 HC) to extrude according the process condition below.

The screws were run at 200 rpm with a vacuum condition of 28 inches Hg and 20-25 pounds per hour (1b/hr) (9.1-11.3 kilograms per hour) of throughput. The strands were cooled through a water bath and then pelletized.

Extrusion conditions (°C in brackets) for Examples 29-31:

Table 10

| Die | Z-7 | Z-6 | Z-5 | Z-4 | Z-3 | Z-2 | Z-1 |
|---|---|---|---|---|---|---|---|
| 388 | 382 | 377 | 371 | 371 | 365 | 204 | 204 |

Extrusion conditions for Examples 32-34:

Table 11

| Die | Z-7 | Z-6 | Z-5 | Z-4 | Z-3 | Z-2 | Z-1 |
|---|---|---|---|---|---|---|---|
| 343 | 338 | 338 | 327 | 288 | 260 | 204 | 71 |

Molding Conditions:

Extruded pellets from Examples 29-31 were dried at 149 degrees C for 4-6 hours and then molded into 2 in x 3 in color step chips of 1, 1.6, 2, and 3.2 mm thickness using a 180T DEMAG molding machine using the conditions shown in Table 12. Examples 32-34 were dried at 121 degrees C for 2 hours and then molded into 2 in x 3 in color step chips having a thickness of 2.5 mm in 85T molder (model FN 1000 by Nissei Plastic Industry) according to the process condition defined Table 13.

Table 12

| Nozzle | Front | Middle | Rear | Mold |
|---|---|---|---|---|
| 388 | 388 | 388 | 388 | 163 |

Table 13:

| Nozzle | Front | Middle | Rear | Mold |
|---|---|---|---|---|
| 354 | 360 | 354 | 338 | 135 |

Examples 29 and 30 were subjected to extended (abusive) molding conditions. Both Examples 29 and 30 were subjected to a molding temperature of 399 degrees C and 3 residence times of 2.5 minutes, 5 minutes and 7.5 minutes. At each of the three residence time conditions, color chips were molded and the Transmission was measured. The residence times were calculated from the equation below. The data were incorporated into the Equation 1 below and a cycle time of ~ 30, 60 and 90 was set to get a residence time to 2.5, 5 and 7.5 minutes of the polymer melt in the barrel. Color chips were molded at three residence times of 2.5 min, 5 min and 7.5 min at the temperature setting mentioned above. Between residence time changes, the first 5 parts were always discarded to ensure that each shot remained in the barrel for the entire residence time.

Residence Time Calculation:

$$t = \frac{(\text{Barrel size (oz)})(\text{Sp. Gr.}/1.05)(28.35\ \text{g/oz})(\text{Cycle time(secs)})}{\text{Part Weight (g)}}$$

For Examples 29-31, measurements were made using a 2000 thermocoupler metricon refracto-meter and

transmission spectra were measured using Hitachi spectrophotometer over a range of 300 nm to 1600 nm. The change in refractive index with temperature (dn/dT) was measured using refractometer with thermal capability, temperature varying from 23C to 120C.

The lead free solder reflow test was carried out using a reflow simulator SRS-1C (Malcom) instrument. The test coupons were injection molded circular discs. The tests were carried out as per JEDEC rating with 60% Relative Humidity /60 C and 80% Relative Humidity /80C conditioning before testing. The peak temperature of reflow test was 260C for 10 sec.

For Examples 32-34, measurements were made using spectrophotometer Color Eye 7000 by Gretag Macbeth, set at D65 illuminant, 10-degree observer Specular Component Included (SCI) mode for color data and spectra graphs at wavelength in visible range between 400 nm through 700 nm, Perkin Elmer UV-Vis-NIR spectrometer for both reflectance and transmission at wavelength between 450 nm to 1100 nm.

Molded color chips of Examples 29 and 30 at different thickness are shown below in Table 14. The %Transmission at 850nm, 1310nm and 1550nm are compared for both samples and the unique feature is, the samples have similar transmission data in the near-IR range. Given a visually black looking color chip, Example 30 shows high transmission in the near-IR range which is similar in magnitude to the natural colored Example 29.

Table 14

| | Wavelength (nm) | Transmittance (%) at indicated thickness | | | |
|---|---|---|---|---|---|
| | | 1 mm | 1.6 mm | 2 mm | 3.2 mm |
| Example 29 | 1550 | 87.3 | 85.8 | 85.1 | 82.8 |
| | 1310 | 88.0 | 87.1 | 86.5 | 84.8 |
| | 850 | 84.2 | 81.7 | 79.5 | 76.1 |
| Example 30 | 1550 | 87.2 | 85.6 | 84.8 | 82.3 |
| | 1310 | 87.8 | 86.7 | 85.9 | 84.1 |
| | 850 | 83.9 | 80.9 | 78.9 | 74.6 |

However, in the visible region (400-700nm) region, Example 30 shows desired black color and exhibits very low transmission if not near zero transmission in this range whereas Example 29, the natural resin, shows amber color and high transmission in this range for a given thickness. Again, this is the unique feature of Example 30 with organic dyes, which made black color, blocked visible light and transmitted IR light at the same level as the natural resin did. Example 31 as expected shows zero transmission across the visible as well as near-IR wavelength region as the result of containing carbon black pigment. Importantly, both Examples 30 and 31 were perceived black visually, however it is unique property of Example 30 that it shows high transmittance in the near-IR range of 760-1800 nm similar to Example 29 and simultaneously blocks visible light interference (400-700nm) similar to Example 31. This data is shown in Figure 1.

Shown below in Table 15 are refractive index properties of Example 29 and Example 30 for different wavelengths ranging from visible (400-700 nm) and near IR (850-1550 nm) wavelengths. One can see that the Example 30 has similar refractive index to Example 29 which is again a unique feature, given that Example 30 contains the polymer + organic dye. In summary, the organic dye in Example 30 does not alter the refractive index properties of the natural polymer (Example 29).

Table 15

| | | Wavelength (nm) | Examples 29 | Example 30 |
|---|---|---|---|---|
| Refractive Index | | 1550 | 1.6207 | 1.6204 |
| | | 1310 | 1.6239 | 1.6237 |
| | | 850 | 1.6355 | 1.6357 |
| | nC | 656.3 | 1.6503 | 1.6506 |
| | nd | 587.6 | 1.6599 | 1.6601 |
| | ne | 546.1 | 1.6678 | 1.6677 |
| | nF | 486.1 | 1.6837 | 1.6828 |
| | ng | 435.8 | 1.7035 | 1.7012 |
| | | Abbe | 19.8 | 20.5 |

Shown below is the abusive molding study conducted on Examples 29 and 30. The effort of this study was to a) compare and contrast the optical properties of Examples 29 and 30 and b) check the stability of the organic dye in Example 30 against high temperatures and long residence times.

Both Examples 29 and 30 were subjected to a molding temperature of 750 degrees F and 3 residence times of 2.5 minutes, 5 minutes and 7.5 minutes. At each of the three residence time conditions, color chips were molded and the light transmission was measured.

Graph of Transmission (%) Vs. Wavelength (nm) are plotted below in two graphs (Figures 2 and 3). In the case of Example 29, the change in %Transmission after 7.5 minutes residence time was found to be approximately 3%.

In case of Example 30, the change in %Transmission after 7.5 minutes residence time was found to be approximately 4%. Thus it can be concluded that the major component of the delta change in optical transmission for Example 30 is coming from the polymer degradation and not necessarily from dye degradation. This is again a unique result in that the organic dye may remain thermally stable at up to 750 degrees F and up to 7.5 minutes of residence time while still providing high %Transmission at the wavelength regions of interest.

Example 32 which is natural resin (no pigment or dye added) has a transmission curve from 400-1100 nm wavelength as shown in Figure 4. The transmission graph below shows that the black Example 33 (a comparative example) made of conventional carbon black pigment has zero transmission across the board of wavelengths in visible region from 450 nm through 700 nm, suggesting that the sample is perceived as black color, and then extend to near IR region up to 1100 nm, suggesting that the sample absorbs all IR radiation, implying all light radiation is absorbed by Example 33.

Contrarily, inventive Example 34 shows also zero transmission in visible region as does Example 32, suggesting that the sample is also perceived as black color, however shows high transmission over the entire near IR region from 800 nm to 1100 nm, a unique feature distinguishing the Example 34 from Example 33. In addition, the Example 34, achieves the similar level of transmission in near IR region as high as the natural resin permits (Example 32), suggesting that the maximum IR transmittance of the invention is a function of the thermoplastic resin chosen.

## Claims

**1.** An article comprising a lens having a width of 0.1 millimeters to 100 millimeters, a length of 0.5 millimeters to 500 millimeters, and a thickness of 0.2 millimeters to 5 millimeters; and the lens transmits more than 60% of light having a wavelength ranging from 760 nanometers to 2500 nanometers, wherein the lens comprises a polymer and a colorant component, and the polymer comprises:

a high heat polymer having a glass transition temperature that is more than 180°C, the high heat polymer selected from the group consisting of polyimides, polyphenylene sulfones, polyethersulfones, polysulfones, and polyetheretherketones, and combinations thereof;

and the colorant component comprises (a) at least two organic dyes, (b) at least an organic dye and an organic pigment, (c) at least two organic pigments, or (d) combinations thereof

and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

**2.** The article of Claim 1, wherein the lens transmits less than 20% of light having a wavelength selected from the group consisting of 380 to 670 nm, 380 to 671 nm, 380 to 672 nm, 380 to 673 nm, 380 to 674 nm, 380 to 675 nm, 380 to 676 nm, 380 to 677 nm, 380 to 678 nm, 380 to 679 nm, 380 to 680 nm, 380 to 681 nm, 380 to 682 nm, 380 to 683 nm, 684 nm, 380 to 685 nm, 380 to 686 nm, 380 to 687 nm, 380 to 688 nm, 380 to 689 nm, 380 to 690 nm, 380 to 691 nm, 380 to 692 nm, 380 to 693 nm, 380 to 694 nm, 380 to 695 nm, 380 to 696 nm, 380 to 697 nm, 380 to 698 nm, 380 to 700 nm, and combinations thereof.

**3.** The article of Claim 1 or 2, wherein the lens transmits more than 5% of light having a wavelength selected from the group consisting of from more than 670 to 760 nm, 671 to 760 nm, 672 to 760 nm, 673 to 760 nm, 673 to 760 nm, 673 to 760 nm, 674 to 760 nm, 675 to 760 nm, 676 to 760 nm, 677 to 760 nm, 678 to 760 nm, 679 to 760 nm, 680 to 760 nm, 681 to 760 nm, 682 to 760 nm, 683 to 760 nm, 684 to 760 nm, 685 to 760 nm, 686 to 760 nm, 687 to 760 nm, 688 to 760 nm, 689 to 760 nm, 690 to 760 nm, 691 to 760 nm, 692 to 760 nm, 693 to 760 nm, 694 to 760 nm, 695 to 760 nm, 696 to 760 nm, 697 to 760 nm, 698 to 760 nm, 699 to 760 nm, 700 to 760 nm, and combinations thereof.

**4.** An article comprising a lens having a width of 0.1 millimeters to 100 millimeters, a length of 0.5 millimeters to 500 millimeters, and a thickness of 0.2 millimeters to 5 millimeters; and the lens (i) transmits more than 60% of light having a wavelength of 760 nanometers to 2500 nanometers, wherein the lens comprises a polymer and a colorant component, and the polymer comprises:

a polyimide comprising structural units derived from

(A) a dianhydride/diamine pair wherein the pair comprises

(i) oxydiphthalic anhydride and diaminodiphenylsulfone, or
(ii) a dianhydride selected from the group consisting of oxydiphthalic anhydride, 3,3, bisphenol A dianhydride, 4,4, bisphenol A dianhydride, and combinations of the foregoing dianhydrides and a diamine selected from the group consisting of meta-phenylenediamine, para-phenylenediamine, diaminodiphenyl sulfone, oxydianiline, and combinations of the foregoing diamines,

(B) a chloro-substituted phthalic anhydride, a diamine selected from the group of meta-phenylenediamine, para- phenylenediamine, diaminodiphenyl sulfone, oxydianiline and combinations thereof, and a dihydroxy phenol salt, or
(C) a combination selected from the group of (A) and (B);
and the colorant component is selected from the group of (a) at least two organic dyes, (b) at least an organic dye and an organic pigment, (c) at least two organic pigments,
and (d) combinations thereof and wherein the lens is transparent and dimensionally stable at a wall thickness of at least 0.2 millimeters to 5.0 millimeters and remains transparent and dimensionally stable after being (a) exposed to a precondition of 60°C/60% relative humidity for 120 hours and (b) then subjected to a lead free solder test having a peak temperature of 260°C for up to 30 seconds.

**5.** The article of Claim 4, wherein the article transmits less than 15% of light having a wavelength of 380 to 700 nm and transmits more than 15% of light having a wavelength of greater than 700 to 760 nm.

**6.** The article of Claim 4 or 5, wherein the polyimide comprises structural units derived from oxydiphthalic anhydride and diaminodiphenyl sulfone, or wherein the polyimide comprises structural units derived from 3,3, bisphenol A dianhydride and diaminodiphenyl sulfone, or wherein the polyimide comprises structural units derived from oxydiphthalic anhydride and 4,4'-oxydianiline.

**7.** The article of any of Claims 4 to 6, wherein the polyimide is a first polyimide polymer and the lens further comprises

a second polyimide polymer, thereby forming a polymer blend, and the polymer blend is a non-delaminated miscible polymer blend.

**8.** The article of Claim 7, wherein the first polyimide polymer comprises structural units derived from oxydiphthalic anhydride and diaminodiphenyl sulfone; and the second polyimide polymer comprises structural units derived from a dianhydride/diamine pair selected from the group consisting of (i) 3,3 bisphenol dianhydride and diaminodiphenyl sulfone, (ii) 4,4, bisphenol A dianhydride and metaphenylene diamine, (iii) 4,4, bisphenol A dianhydride and para-phenylenediamine, (iv) 4,4 bisphenol dianhydride and diaminodiphenyl sulfone, and (v) combinations of the foregoing dianhydride/diamine pairs.

**9.** The article of Claim 7, wherein the first polyimide polymer comprises structural units derived from 3,3 bisphenol dianhydride and diaminodiphenyl sulfone; and the second polyimide polymer comprises structural units derived from a dianhydride/diamine pair selected from the group consisting of (i) 4,4, bisphenol A dianhydride and metaphenylene diamine, (ii) 4,4, bisphenol A dianhydride and para- phenylenediamine, (iii) 4,4 bisphenol dianhydride and diaminodiphenyl sulfone, and (iv) combinations of the forgoing dianhydride/diamine pairs.

**10.** The article of Claim 7, wherein
the first polyimide is present in an amount of 50 to 99 weight percent;
the second polyimide is present in an amount of 1 to 50 weight percent; and
the thermoplastic composition further comprises 0 to 70 weight percent of a component selected from the group consisting of fillers, reinforcements, additives, and combinations thereof;
wherein the first polyimide, the second polyimide, and the component are present at a total weight percent of 100.

**11.** The article of any of Claims 4 to 6, wherein the composition further comprises at least one polymer that is not a polyimide.

**12.** The article of Claim 11, wherein the at least one polymer is selected from the group consisting of polyesters, polyestercarbonates, polysulfones, polyether sulfones, polybenzimidizole, polyketones, and combinations of the foregoing polymers.

**13.** The article of any of Claims 4 to 12, wherein the lens has a transparency that is greater than or equal to 60% at a thickness of 2 millimeters.

**14.** The article of any of Claims 4 to 13 wherein the article is a component of an optical transreceiver.

**15.** The article of any of the preceding claims, wherein the at least two organic dyes is selected from the group consisting of (i) a mixture comprising a green organic dye and a red organic dye, (ii) a mixture comprising an orange organic dye, blue organic dye, and red organic dye (iii) a mixture comprising a purple organic dye, a yellow organic dye and a blue organic dye, and (iv) combinations thereof, and further wherein the at least one organic dye and an organic pigment is selected from the group consisting of (i) mixtures comprising a green organic pigments and a red organic dyes, (ii) mixtures comprising a green organic dyes and a red organic pigments, (iii) mixtures comprising an orange dyes, blue organic pigments, and red organic dyes, (iv) mixtures comprising an orange organic dyes, blue organic dyes, and red organic pigments, and (v) mixtures comprising an orange organic pigments, blue organic dyes, and red organic dyes, and, and (vi) mixtures comprising a purple organic dyes, a yellow organic dyes and a blue organic pigments, and (iv) combinations thereof, further wherein the at least two organic pigments is selected from the group consisting of (i) mixtures comprising a green organic pigments and a red organic pigment, (ii) mixtures comprising an orange organic pigments, blue organic pigments, and red organic pigments (iii) mixtures comprising a purple organic pigment, a yellow organic pigments and a blue organic pigments, (iv) mixtures comprising blue organic pigments, yellow organic pigments, and red organic pigments and (v) combinations thereof

## Patentansprüche

**1.** Artikel umfassend eine Linse mit einer Breite von 0,1 Millimetern bis 100 Millimeter, einer Länge von 0,5 Millimetern bis 500 Millimeter und einer Dicke von 0,2 Millimetern bis 5 Millimeter; und wobei die Linse mehr als 60 % eines Lichts mit einer von 760 Nanometern bis 2500 Nanometer reichenden Wellenlänge durchlässt, wobei die Linse ein Polymer und eine Farbmittelkomponente umfasst und das Polymer Folgendes umfasst:

ein hochhitzebeständiges Polymer mit einer Glasübergangstemperatur, die höher als 180 °C ist, wobei das hochhitzebeständige Polymer aus der Gruppe bestehend aus Polyimiden, Polyphenylensulfonen, Polyethersulfonen, Polysulfonen und Polyetheretherketonen und Kombinationen davon ausgewählt ist;
und wobei die Farbmittelkomponente (a) mindestens zwei organische Farbstoffe, (b) mindestens einen organischen Farbstoff und ein organisches Pigment, (c) mindestens zwei organische Pigmente oder (d) Kombinationen davon umfasst;
und wobei die Linse lichtdurchlässig und dimensionsstabil bei einer Wanddicke von mindestens 0,2 Millimetern bis 5,0 Millimeter ist und lichtdurchlässig und dimensionsstabil bleibt, nachdem sie (a) 120 Stunden einer Vorbehandlung mit 60 °C/60 % relativer Feuchtigkeit ausgesetzt wurde und (b) dann für bis zu 30 Sekunden einer Prüfung mit bleifreiem Lötmittel mit einer Spitzentemperatur von 260 °C unterzogen wurde.

**2.** Artikel nach Anspruch 1, wobei die Linse weniger als 20 % eines Lichts mit einer Wellenlänge durchlässt, die aus der Gruppe bestehend aus 380 bis 670 nm, 380 bis 671 nm, 380 bis 672 nm, 380 bis 673 nm, 380 bis 674 nm, 380 bis 675 nm, 380 bis 676 nm, 380 bis 677 nm, 380 bis 678 nm, 380 bis 679 nm, 380 bis 680 nm, 380 bis 681 nm, 380 bis 682 nm, 380 bis 683 nm, 684 nm, 380 bis 685 nm, 380 bis 686 nm, 380 bis 687 nm, 380 bis 688 nm, 380 bis 689 nm, 380 bis 690 nm, 380 bis 691 nm, 380 bis 692 nm, 380 bis 693 nm, 380 bis 694 nm, 380 bis 695 nm, 380 bis 696 nm, 380 bis 697 nm, 380 bis 698 nm, 380 bis 700 nm und Kombinationen davon ausgewählt ist.

**3.** Artikel nach Anspruch 1 oder 2, wobei die Linse mehr als 5 % eines Lichts mit einer Wellenlänge durchlässt, die aus der Gruppe bestehend aus mehr als 670 bis 760 nm, 671 bis 760 nm, 672 bis 760 nm, 673 bis 760 nm, 673 bis 760 nm, 673 bis 760 nm, 674 bis 760 nm, 675 bis 760 nm, 676 bis 760 nm, 677 bis 760 nm, 678 bis 760 nm, 679 bis 760 nm, 680 bis 760 nm, 681 bis 760 nm, 682 bis 760 nm, 683 bis 760 nm, 684 bis 760 nm, 685 bis 760 nm, 686 bis 760 nm, 687 bis 760 nm, 688 bis 760 nm, 689 bis 760 nm, 690 bis 760 nm, 691 bis 760 nm, 692 bis 760 nm, 693 bis 760 nm, 694 bis 760 nm, 695 bis 760 nm, 696 bis 760 nm, 697 bis 760 nm, 698 bis 760 nm, 699 bis 760 nm, 700 bis 760 nm und Kombinationen davon ausgewählt ist.

**4.** Artikel umfassend eine Linse mit einer Breite von 0,1 Millimetern bis 100 Millimeter, einer Länge von 0,5 Millimetern bis 500 Millimeter und einer Dicke von 0,2 Millimetern bis 5 Millimeter; und wobei die Linse (i) mehr als 60 % eines Lichts mit einer von 760 Nanometern bis 2500 Nanometer reichenden Wellenlänge durchlässt, wobei die Linse ein Polymer und eine Farbmittelkomponente umfasst und das Polymer Folgendes umfasst:

ein Polyimid, das Struktureinheiten umfasst, die abgeleitet sind von:

(A) einem Dianhydrid/Diamin-Paar, wobei das Paar Folgendes umfasst:

(i) Oxydiphthalsäureanhydrid und Diaminodiphenylsulfon oder
(ii) ein Dianhydrid, das aus der Gruppe bestehend aus Oxydiphthalsäureanhydrid, 3,3-Bisphenol-A-dianhydrid, 4,4-Bisphenol-A-dianhydrid und Kombinationen der vorangehenden Dianhydride ausgewählt ist, und ein Diamin, das aus der Gruppe bestehend aus meta-Phenylendiamin, para-Phenylendiamin, Diaminodiphenylsulfon, Oxydianilin und Kombinationen der vorangehenden Diamine ausgewählt ist,

(B) einem chlorsubstituierten Phthalsäureanhydrid, einem Diamin, das aus der Gruppe von meta-Phenylendiamin, para-Phenylendiamin, Diaminodiphenylsulfon, Oxydianilin und Kombinationen davon ausgewählt ist, und einem Dihydroxyphenolsalz oder
(C) einer Kombination, die aus der Gruppe (A) und (B) ausgewählt ist;
und wobei die Farbmittelkomponente aus der Gruppe von (a) mindestens zwei organischen Farbstoffen, (b) mindestens einem organischen Farbstoff und einem organischen Pigment, (c) mindestens zwei organischen Pigmenten und (d) Kombinationen davon ausgewählt ist und wobei die Linse lichtdurchlässig und dimensionsstabil bei einer Wanddicke von mindestens 0,2 Millimetern bis 5,0 Millimeter ist und lichtdurchlässig und dimensionsstabil bleibt, nachdem sie (a) 120 Stunden einer Vorbehandlung mit 60 °C/60 % relativer Feuchtigkeit ausgesetzt wurde und (b) dann für bis zu 30 Sekunden einer Prüfung mit bleifreiem Lötmittel mit einer Spitzentemperatur von 260 °C unterzogen wurde.

**5.** Artikel nach Anspruch 4, wobei der Artikel weniger als 15 % eines Lichts mit einer Wellenlänge von 380 bis 700 nm durchlässt und mehr als 15 % eines Lichts mit einer Wellenlänge von mehr als 700 bis 760 nm durchlässt.

**6.** Artikel nach Anspruch 4 oder 5, wobei das Polyimid Struktureinheiten umfasst, die von Oxydiphthalsäureanhydrid

und Diaminodiphenylsulfon abgeleitet sind, oder wobei das Polyimid Struktureinheiten umfasst, die von 3,3-Bisphenol-A-dianhydrid und Diaminodiphenylsulfon abgeleitet sind, oder wobei das Polyimid Struktureinheiten umfasst, die von Oxydiphthalsäureanhydrid und 4,4'-Oxydianilin abgeleitet sind.

**7.** Artikel nach irgendeinem der Ansprüche 4 bis 6, wobei das Polyimid ein erstes Polyimidpolymer ist und die Linse ferner ein zweites Polyimidpolymer umfasst, wodurch ein Polymerblend gebildet ist und das Polymerblend ein nicht-aufgeblättertes, mischbares Polymerblend ist.

**8.** Artikel nach Anspruch 7, wobei das erste Polyimidpolymer Struktureinheiten umfasst, die von Oxydiphthalsäureanhydrid und Diaminodiphenylsulfon abgeleitet sind; und das zweite Polyimidpolymer Struktureinheiten umfasst, die von einem Dianhydrid/Diamin-Paar abgeleitet sind, das aus der Gruppe bestehend aus (i) 3,3-Bisphenoldianhydrid und Diaminodiphenylsulfon, (ii) 4,4-Bisphenol-A-dianhydrid und Metaphenylendiamin, (iii) 4,4-Bisphenol-A-dianhydrid und para-Phenylendiamin, (iv) 4,4-Bisphenoldianhydrid und Diaminodiphenylsulfon und (v) Kombinationen der vorangehenden Dianhydrid/Diamin-Paare ausgewählt ist.

**9.** Artikel nach Anspruch 7, wobei das erste Polyimidpolymer Struktureinheiten umfasst, die von 3,3-Bisphenoldianhydrid und Diaminodiphenylsulfon abgeleitet sind; und das zweite Polyimidpolymer Struktureinheiten umfasst, die von einem Dianhydrid/Diamin-Paar abgeleitet sind, das aus der Gruppe bestehend aus (i) 4,4-Bisphenol-A-dianhydrid und Metaphenylendiamin, (ii) 4,4-Bisphenol-A-dianhydrid und para-Phenylendiamin, (iii) 4,4-Bisphenoldianhydrid und Diaminodiphenylsulfon und (iv) Kombinationen der vorangehenden Dianhydrid/Diamin-Paare ausgewählt ist.

**10.** Artikel nach Anspruch 7, wobei
das erste Polyimid in einer Menge von 50 bis 99 Gewichtsprozent vorhanden ist;
das zweite Polyimid in einer Menge von 1 bis 50 Gewichtsprozent vorhanden ist; und
die thermoplastische Zusammensetzung ferner zu 0 bis 70 Gewichtsprozent eine Komponente umfasst, die aus der Gruppe bestehend aus Füllstoffen, Verstärkungen, Additiven und Kombinationen davon ausgewählt ist;
wobei das erste Polyimid, das zweite Polyimid und die Komponente in einem Gesamtgewichtsprozentanteil von 100 vorhanden sind.

**11.** Artikel nach irgendeinem der Ansprüche 4 bis 6, wobei die Zusammensetzung ferner mindestens ein Polymer umfasst, das kein Polyimid ist.

**12.** Artikel nach Anspruch 11, wobei das mindestens eine Polymer aus der Gruppe bestehend aus Polyestern, Polyestercarbonaten, Polysulfonen, Polyethersulfonen, Polybenzimidizol, Polyketonen und Kombinationen der vorangehenden Polymere ausgewählt ist.

**13.** Artikel nach irgendeinem der Ansprüche 4 bis 12, wobei die Linse eine Lichtdurchlässigkeit aufweist, die größer als oder gleich 60 % bei einer Dicke von 2 Millimetern ist.

**14.** Artikel nach irgendeinem der Ansprüche 4 bis 13, wobei der Artikel eine Komponente eines optischen Sendeempfängers ist.

**15.** Artikel nach irgendeinem der vorangehenden Ansprüche, wobei die mindestens zwei organischen Farbstoffe aus der Gruppe bestehend aus (i) einer Mischung, die einen grünen organischen Farbstoff und einen roten organischen Farbstoff umfasst, (ii) einer Mischung, die einen orangefarbenen organischen Farbstoff, einen blauen organischen Farbstoff und einen roten organischen Farbstoff umfasst, (iii) einer Mischung, die einen purpurnen organischen Farbstoff, einen gelben organischen Farbstoff und einen blauen organischen Farbstoff umfasst, und (iv) Kombinationen davon ausgewählt sind, und wobei ferner der mindestens eine organische Farbstoff und ein organisches Pigment aus der Gruppe bestehend aus (i) Mischungen, die grüne organische Pigmente und rote organische Farbstoffe umfassen, (ii) Mischungen, die grüne organische Farbstoffe und rote organische Pigmente umfassen, (iii) Mischungen, die orangefarbene Farbstoffe, blaue organische Pigmente und rote organische Farbstoffe umfassen, (iv) Mischungen, die orangefarbene organische Farbstoffe, blaue organische Farbstoffe und rote organische Pigmente umfassen und (v) Mischungen, die orangefarbene organische Pigmente, blaue organische Farbstoffe und rote organische Farbstoffe umfassen, und (vi) Mischungen, die purpurne organische Farbstoffe, gelbe organische Farbstoffe und blaue organische Pigmente umfassen, und (vii) Kombinationen davon ausgewählt sind, wobei ferner die mindestens zwei organischen Pigmente aus der Gruppe bestehend aus (i) Mischungen, die grüne organische Pigmente und ein rotes organisches Pigment umfassen, (ii) Mischungen, die orangefarbene organische Pigmente,

blaue organische Pigmente und rote organische Pigmente umfassen, (iii) Mischungen, die ein purpurnes organisches Pigment, gelbe organische Pigmente und blaue organische Pigmente umfassen, (iv) Mischungen, die blaue organische Pigmente, gelbe organische Pigmente und rote organische Pigmente umfassen, und (v) Kombinationen davon ausgewählt sind.

## Revendications

1. Article comprenant une lentille possédant une largeur de 0,1 mm à 100 mm, une longueur de 0,5 mm à 500 mm et une épaisseur de 0,2 mm à 5 mm, et la lentille transmet plus de 60 % de lumière dont la longueur d'onde se situe dans la plage de 760 nm à 2500 nm, dans lequel la lentille comprend un polymère et un composant faisant office de colorant, et le polymère comprend :

   un polymère résistant aux températures élevées possédant une température de transition vitreuse qui est supérieure à 180 °C, le polymère résistant aux températures élevées étant choisi parmi le groupe constitué par des polyimides, des polyphénylène sulfones, des polyéthersulfones, des polysulfones et des polyétheréthercétones, ainsi que leurs combinaisons ;
   et le composant faisant office de colorant comprend : (a) au moins deux colorants organiques ; (b) au moins un colorant organique et un pigment organique ; (c) au moins deux pigments organiques ; ou (d) leurs combinaisons ;
   et dans lequel la lentille est transparente et résiste aux déformations à une épaisseur de paroi d'au moins 0,2 mm à 5,0 mm et reste transparente et résiste toujours aux déformations après (a) avoir été exposée à une précondition de 60 °C/humidité relative de 60 % pendant 120 heures et (b) avoir été soumise à un test de brasage sans plomb possédant une température maximale de 260 °C, pendant un laps de temps allant jusqu'à 30 secondes.

2. Article selon la revendication 1, dans lequel la lentille transmet moins de 20 % de lumière dont la longueur d'onde est choisie parmi le groupe constitué par 380 à 670 nm, 380 à 671 nm, 380 à 672 nm, 380 à 673 nm, 380 à 674 nm, 380 à 675 nm, 380 à 676 nm, 380 à 677 nm, 380 à 678 nm, 380 à 679 nm, 380 à 680 nm, 380 à 681 nm, 380 à 682 nm, 380 à 683 nm, 684 nm, 380 à 685 nm, 380 à 686 nm, 380 à 687 nm, 380 à 688 nm, 380 à 689 nm, 380 à 690 nm, 380 à 691 nm, 380 à 692 nm, 380 à 693 nm, 380 à 694 nm, 380 à 695 nm, 380 à 696 nm, 380 à 697 nm, 380 à 698 nm, 380 à 700 nm, ainsi que leurs combinaisons.

3. Article selon la revendication 1 ou 2, dans lequel la lentille transmet plus de 5 % de lumière dont la longueur d'onde est choisie parmi le groupe constitué par 670 à 760 nm, 671 à 760 nm, 672 à 760 nm, 673 à 760 nm, 673 à 760 nm, 673 à 760 nm, 674 à 760 nm, 675 à 760 nm, 676 à 760 nm, 677 à 760 nm, 678 à 760 nm, 679 à 760 nm, 680 à 760 nm, 681 à 760 nm, 682 à 760 nm, 683 à 760 nm, 684 à 760 nm, 685 à 760 nm, 686 à 760 nm, 687 à 760 nm, 688 à 760 nm, 689 à 760 nm, 690 à 760 nm, 691 à 760 nm, 692 à 760 nm, 693 à 760 nm, 694 à 760 nm, 695 à 760 nm, 696 à 760 nm, 697 à 760 nm, 698 à 760 nm, 699 à 760 nm, 700 à 760 nm, ainsi que leurs combinaisons.

4. Article comprenant une lentille possédant une largeur de 0,1 mm à 100 mm, une longueur de 0,5 mm à 500 mm et une épaisseur de 0,2 mm à 5 mm, et la lentille transmet plus de 60 % de lumière dont la longueur d'onde se situe dans la plage de 760 nm à 2500 nm, dans lequel la lentille comprend un polymère et un composant faisant office de colorant, et le polymère comprend :

   un polyimide comprenant des motifs structuraux qui dérivent :

   (A) d'une paire de dianhydride/diamine, ladite paire comprenant :

   (i) de l'anhydride oxydiphtalique et de la diaminodiphényl sulfone ; ou
   (ii) un dianhydride choisi parmi le groupe constitué par de l'anhydride oxydiphtalique, du 3,3-bisphénol A dianhydride, du 4,4-bisphénol A dianhydride, ainsi que des combinaisons des dianhydrides mentionnés ci-dessus et d'une diamine choisie parmi le groupe constitué par la méta-phénylènediamine, la para-phénylènediamine, la diaminodiphényl sulfone, l'oxydianiline, ainsi que des combinaisons des diamines mentionnées ci-dessus ;

   (B) d'un anhydride phtalique substitué sur l'atome de chlore, d'une diamine choisie parmi le groupe comprenant la méta-phénylènediamine, la para-phénylènediamine, la diaminodiphényl sulfone, l'oxydianiline,

ainsi que des combinaisons des diamines mentionnées ci-dessus, et d'un sel de dihydroxy phénol ; ou
(C) d'une combinaison choisie parmi les groupes (A) et (B) ;
et le composant faisant office de colorant est choisi parmi le groupe comprenant : (a) au moins deux colorants organiques ; (b) au moins un colorant organique et un pigment organique ; (c) au moins deux pigments organiques ; et (d) leurs combinaisons, et dans lequel la lentille est transparente et résiste aux déformations à une épaisseur de paroi d'au moins 0,2 mm à 5,0 mm et reste transparente et résiste toujours aux déformations après (a) avoir été exposée à une précondition de 60 °C/humidité relative de 60 % pendant 120 heures et (b) avoir été soumise à un test de brasage sans plomb possédant une température maximale de 260 °C, pendant un laps de temps allant jusqu'à 30 secondes.

**5.** Article selon la revendication 4, dans lequel l'article transmet moins de 15 % de lumière dont la longueur d'onde s'élève de 380 à 700 nm et transmet plus de 15 % de lumière dont la longueur d'onde est supérieure à une valeur de 700 à 760 nm.

**6.** Article selon la revendication 4 ou 5, dans lequel le polyimide comprend des motifs structuraux qui dérivent de l'anhydride oxydiphtalique et de la diaminodiphényl sulfone ; ou dans lequel le polyimide comprend des motifs structuraux qui dérivent du 3,3-bisphénol A dianhydride et de la diaminodiphényl sulfone, ou dans lequel le polyimide comprend des motifs structuraux qui dérivent de l'anhydride oxydiphtalique et de la 4,4'-oxydianiline.

**7.** Article selon l'une quelconque des revendications 4 à 6, dans lequel le polyimide représente un premier polymère à base de polyimide et la lentille comprend en outre un deuxième polymère à base de polyimide, pour ainsi obtenir un mélange polymère, et un mélange polymère représente un mélange polymère miscible non délaminé.

**8.** Article selon la revendication 7, dans lequel le premier polymère à base de polyimide comprend des motifs structuraux qui dérivent de l'anhydride oxydiphtalique et de la diaminodiphényl sulfone ; et le deuxième polymère à base de polyimide comprend des motifs structuraux qui dérivent d'une paire de dianhydride/diamine choisie parmi le groupe constitué par : (i) du 3,3-bisphénol A dianhydride et de la diaminodiphényl sulfone ; (ii) du 4,4-bisphénol A dianhydride et de la méta-phénylènediamine ; (iii) du 4,4-bisphénol A dianhydride et de la para-phénylènediamine ; (iv) du 4,4-bisphénol dianhydride et de la diaminodiphényl sulfone ; et (v) des combinaisons des paires de dianhydride/diamine mentionnées ci-dessus.

**9.** Article selon la revendication 7, dans lequel le premier polymère à base de polyimide comprend des motifs structuraux qui dérivent du 3,3-bisphénol dianhydride et de la diaminodiphényl sulfone ; et le deuxième polymère à base de polyimide comprend des motifs structuraux qui dérivent d'une paire de dianhydride/diamine choisie parmi le groupe constitué par : (i) du 4,4-bisphénol dianhydride et de la méta-phénylènediamine ; (ii) du 4,4-bisphénol A dianhydride et de la para-phénylènediamine ; (iii) du 4,4-bisphénol dianhydride et de la diaminodiphényl sulfone ; et (iv) des combinaisons des paires de dianhydride/diamine mentionnées ci-dessus.

**10.** Article selon la revendication 7, dans lequel :

le premier polyimide est présent en une quantité de 50 à 99 % poids ;
le deuxième polyimide est présent en une quantité de 1 à 50 % en poids ; et
la composition thermoplastique comprend en outre de 0 à 70 % poids d'un composant choisi parmi le groupe constitué par des matières de charge, des renforcements, des additifs, ainsi que leurs combinaisons ;
dans lequel le premier polyimide, le deuxième polyimide et le composant sont présents à concurrence d'un pourcentage en poids total égal à 100.

**11.** Article selon l'une quelconque des revendications 4 à 6, dans lequel la composition comprend en outre au moins un polymère qui n'est pas un polyimide.

**12.** Article selon la revendication 11, dans lequel ledit au moins un polymère est choisi parmi le groupe constitué par des polyesters, des polyestercarbonates, des polysulfones, des polyéther sulfones, du polybenzimidazole, des polycétones, et des combinaisons des polymères mentionnés ci-dessus.

**13.** Article selon l'une quelconque des revendications 4 à 12, dans lequel la lentille possède une transparence qui est supérieure ou égale à 60 % à une épaisseur de 2 mm.

**14.** Article selon l'une quelconque des revendications 4 à 13, dans lequel l'article est un composant d'un transcepteur

optique.

**15.** Article selon l'une quelconque des revendications précédentes, dans lequel lesdits au moins deux colorants organiques sont choisis parmi le groupe constitué par : (i) un mélange comprenant un ou plusieurs colorants organiques verts et un ou plusieurs colorants organiques rouges ; (ii) un mélange comprenant un ou plusieurs colorants organiques oranges, un ou plusieurs colorants organiques bleus et un ou plusieurs colorants organiques rouges ; (iii) un mélange comprenant un ou plusieurs colorants organiques violets, un ou plusieurs colorants organiques jaunes et un ou plusieurs colorants organiques bleus ; et (iv) des combinaisons desdits mélanges ; et en outre dans lequel ledit au moins un colorant organique et un pigment organique sont choisis parmi le groupe constitué par : (i) des mélanges comprenant un ou plusieurs pigments organiques verts et un ou plusieurs colorants organiques rouges ; (ii) des mélanges comprenant un ou plusieurs colorants organiques verts et un ou plusieurs pigments organiques rouges ; (iii) des mélanges comprenant un ou plusieurs colorants oranges, un ou plusieurs pigments organiques bleus et un ou plusieurs colorants organiques rouges ; (iv) des mélanges comprenant un ou plusieurs colorants organiques oranges, un ou plusieurs colorants organiques bleus et un ou plusieurs pigments organiques rouges ; et (v) des mélanges comprenant un ou plusieurs pigments organiques oranges, un ou plusieurs colorants organiques bleus et un ou plusieurs colorants organiques rouges ; et (vi) des mélanges comprenant un ou plusieurs colorants organiques violets, un ou plusieurs colorants organiques jaunes et un ou plusieurs pigments organiques bleus ; et (vii) des combinaisons desdits mélanges ; en outre dans lequel lesdits au moins deux pigments organiques sont choisis parmi le groupe constitué par : (i) des mélanges comprenant un ou plusieurs pigments organiques verts et un ou plusieurs pigments organiques rouges ; (ii) des mélanges comprenant un ou plusieurs pigments organiques oranges, un ou plusieurs pigments organiques bleus et un ou plusieurs pigments organiques rouges ; (iii) des mélanges comprenant un ou plusieurs pigments organiques violets, un ou plusieurs pigments organiques jaunes et un ou plusieurs pigments organiques bleus ; (iv) des mélanges comprenant un ou plusieurs pigments organiques bleus, un ou plusieurs pigments organiques jaunes et un ou plusieurs pigments organiques rouges ; et (v) des combinaisons desdits mélanges.

Figure 1

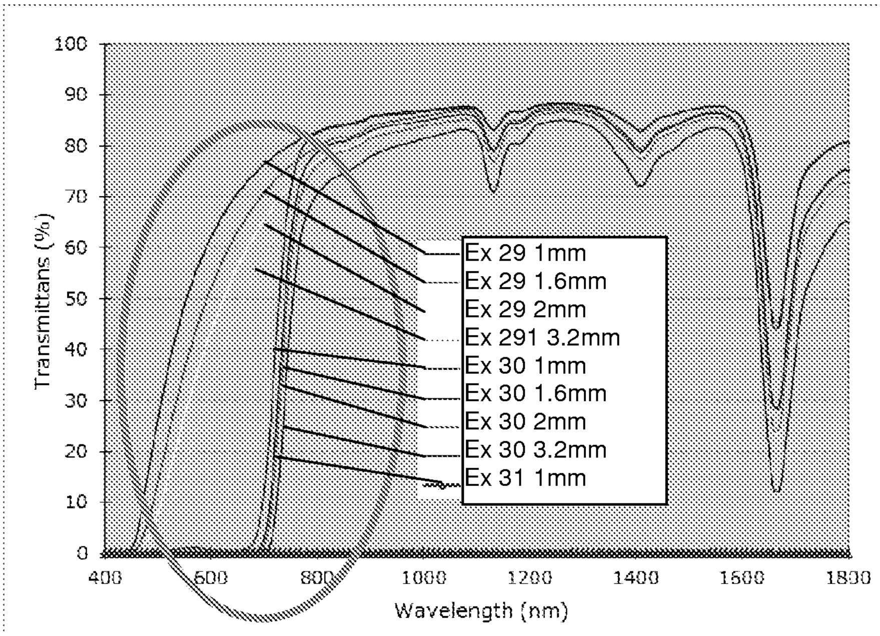
100
90
80
70
60
50
40
30
20
10
0
Transmittans (%)
400
600
800
1000
1200
1400
1600
1800
Wavelength (nm)
Ex 29 1mm
Ex 29 1.6mm
Ex 29 2mm
Ex 291 3.2mm
Ex 30 1mm
Ex 30 1.6mm
Ex 30 2mm
Ex 30 3.2mm
Ex 31 1mm

Figure 2

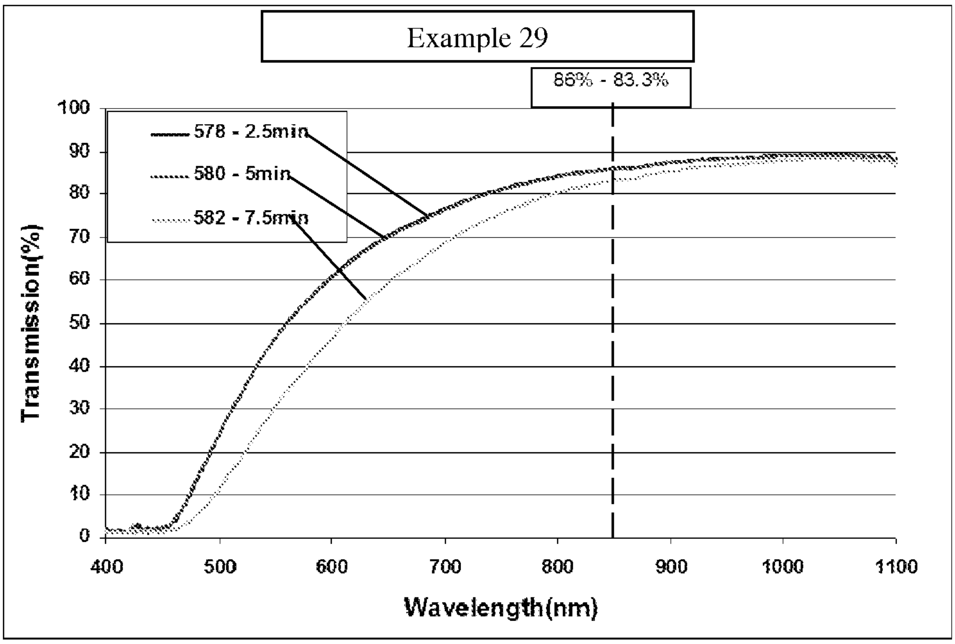
Example 29
86% - 83.3%
578 - 2.5min
580 - 5min
582 - 7.5min
Transmission(%)
Wavelength(nm)
100
90
80
70
60
50
40
30
20
10
0
400
500
600
700
800
900
1000
1100

Figure 3

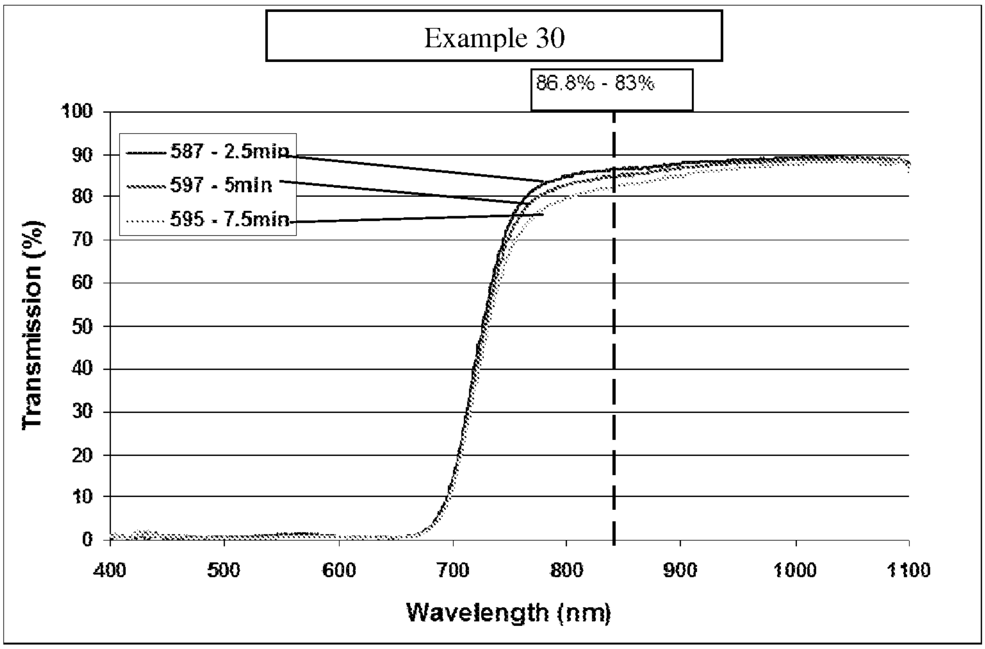
Example 30
86.8% - 83%
587 - 2.5min
597 - 5min
595 - 7.5min
Transmission (%)
100
90
80
70
60
50
40
30
20
10
0
400
500
600
700
800
900
1000
1100
Wavelength (nm)

Figure 4

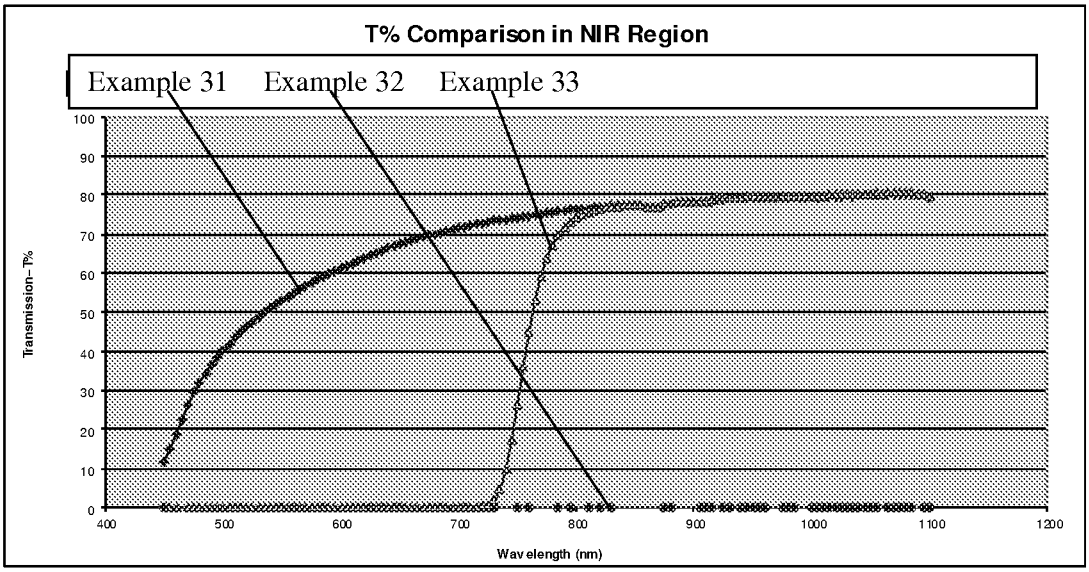
T% Comparison in NIR Region
Example 31
Example 32
Example 33
Transmission- T%
100
90
80
70
60
50
40
30
20
10
0
400
500
600
700
800
900
1000
1100
1200
Wavelength (nm)